(19) Europäisches Patentamt
European Patent Office
Office européen des brevets

(11) **EP 3 154 682 B1**

(12) **FASCICULE DE BREVET EUROPEEN**

(45) Date de publication et mention
de la délivrance du brevet:
**25.12.2019 Bulletin 2019/52**

(21) Numéro de dépôt: **15736795.4**

(22) Date de dépôt: **09.06.2015**

(51) Int Cl.:
*B01J 23/74* (2006.01)       *B01J 23/75* (2006.01)
*B01J 23/755* (2006.01)      *B01J 23/76* (2006.01)
*B01J 37/03* (2006.01)       *B01J 37/08* (2006.01)
*B01J 37/16* (2006.01)       *B01J 37/20* (2006.01)
*B01J 23/88* (2006.01)       *B01J 23/882* (2006.01)
*B01J 23/883* (2006.01)      *B01J 23/888* (2006.01)
*B01J 27/185* (2006.01)      *B01J 27/188* (2006.01)
*B01J 35/10* (2006.01)       *B01J 37/02* (2006.01)
*C01F 7/02* (2006.01)        *C01F 7/34* (2006.01)
*C10G 45/08* (2006.01)       *B01J 21/04* (2006.01)

(86) Numéro de dépôt international:
**PCT/EP2015/062821**

(87) Numéro de publication internationale:
**WO 2015/189195 (17.12.2015 Gazette 2015/50)**

(54) **CATALYSEUR MESOPOREUX D'HYDROCONVERSION DE RÉSIDUS ET MÉTHODE DE PRÉPARATION**

MESOPORÖSER KATAYSATOR ZUR WASSERSTOFFBEHANDLUNG VON ÖLRÜCKSTANDEN UND DESSEN HERSTELLUNGSVERFAHREN

MESOPOROUS CATALYST FOR HYDROTREATING PETROLEUM RESIDUE AND PREPARATION METHOD THEREOF

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.06.2014 FR 1455415**

(43) Date de publication de la demande:
**19.04.2017 Bulletin 2017/16**

(73) Titulaire: **IFP Energies nouvelles**
**92500 Rueil-Malmaison (FR)**

(72) Inventeurs:
• **BOUALLEG, Malika**
**69100 Villeurbanne (FR)**
• **GUICHARD, Bertrand**
**38140 Izeaux (FR)**

(74) Mandataire: **IFP Energies nouvelles**
**Département Propriété Industrielle**
**Rond Point de l'échangeur de Solaize**
**BP3**
**69360 Solaize (FR)**

(56) Documents cités:
**WO-A1-2005/028106      GB-A- 2 069 363**
**US-A- 4 267 033      US-A- 4 460 707**
**US-B1- 6 589 908**

Remarques:
Le dossier contient des informations techniques présentées postérieurement au dépôt de la demande et ne figurant pas dans le présent fascicule.

## Description

### Domaine technique de l'invention

L'invention concerne un procédé de préparation d'un catalyseur d'hydrotraitement présentant une texture et une formulation favorables à l'hydrodémétallation (HDM), tout en conservant une activité en hydrodésulfuration (HDS) satisfaisante.

### Art antérieur

Il est connu de l'Homme du métier que l'hydrotraitement catalytique permet, par la mise en contact d'une charge hydrocarbonée avec un catalyseur dont les propriétés, en termes de métaux de la phase active et de porosité, sont préalablement bien ajustées, de réduire sensiblement sa teneur en asphaltènes, métaux, soufre et autres impuretés tout en améliorant le rapport hydrogène sur carbone (H/C) et tout en la transformant plus ou moins partiellement en coupes plus légères.

Les procédés d'hydrotraitement des résidus en lit fixe (couramment appelé "Resid Desulfurization" unit ou RDS) conduisent à des performances en raffinage élevées : typiquement ils permettent de produire une coupe de température d'ébullition supérieure à 370°C contenant moins de 0,5% poids de soufre et moins de 20 ppm de métaux à partir de charges contenant jusqu'à 5% poids de soufre et jusqu'à 250 ppm de métaux (Ni+V). Les différents effluents ainsi obtenus peuvent servir de base pour la production de fiouls lourds de bonne qualité et/ou de charges prétraitée pour d'autres unités telles que le craquage catalytique ("Fluid Catalytic Cracking" selon la terminologie anglo-saxonne). Par contre, l'hydroconversion du résidu en coupes plus légères que le résidu atmosphérique (gazole et essence notamment) est en général faible, typiquement de l'ordre de 10-20 %pds. Dans un tel procédé, la charge, préalablement mélangée à de l'hydrogène, circule à travers plusieurs réacteurs en lit fixe disposés en série et remplis par des catalyseurs. La pression totale est typiquement comprise entre 100 et 200 bar (10-20 MPa) et les températures entre 340 et 420 °C. Les effluents soutirés du dernier réacteur sont envoyés vers une section de fractionnement.

Classiquement, le procédé d'hydrotraitement en lit fixe est constitué d'au moins deux étapes (ou sections). La première étape dite d'hydrodémétallation (HDM) vise principalement à éliminer la majorité des métaux de la charge en utilisant un ou plusieurs catalyseurs d'hydrodémétallation. Cette étape regroupe principalement les opérations d'élimination du vanadium et du nickel et dans une moindre mesure du fer.

La seconde étape ou section, dite d'hydrodésulfuration (HDS), consiste à faire passer le produit de la première étape sur un ou plusieurs catalyseurs d'hydrodésulfuration, plus actifs en terme d'hydrodésulfuration et d'hydrogénation de la charge, mais moins tolérants aux métaux.

Pour l'étape d'hydrodémétallation (HDM), le catalyseur doit être apte à traiter des charges riches en métaux et en asphaltènes, tout en ayant un haut pouvoir démétallisant associé à une haute capacité de rétention en métaux et une grande résistance au cokage. Des catalyseurs présentant une distribution poreuse bimodale permettant d'atteindre de forts rendements en hydrodémétallation ont été décrits dans le brevet US 5 221 656. L'avantage d'une telle distribution poreuse est aussi mise en avant dans les brevets US 5 089 463 et US 7 119 045. La phase active initiale du catalyseur placé dans l'étape d'hydrodémétallation est généralement constituée de nickel et de molybdène, et éventuellement de dopants tels que le phosphore. Cette phase active est connue pour être plus hydrogénante qu'une phase constituée de cobalt et de molybdène, aussi utilisée parfois, et permet donc de limiter la formation de coke dans la porosité et ainsi la désactivation.

Pour l'étape d'hydrodésulfuration (HDS), le catalyseur doit présenter un fort potentiel hydrogénolysant de manière à réaliser un raffinage profond des produits : désulfuration, poursuite de la démétallation, abaissement du carbon conradson (CCR) et de la teneur en asphaltènes. Un tel catalyseur se caractérise par un faible volume macroporeux (US 6 589 908). De plus, on apprend dans le brevet US 4 818 743 que la distribution poreuse peut être monopopulée entre 1 et 13 nm ou bipopulée avec une différence relative entre les deux populations qui peut varier de 1 à 20 nm comme dans le brevet US 6 589 908. La phase active du catalyseur placé dans l'étape d'hydrodésulfuration est généralement constituée de cobalt et de molybdène, comme cela est décrit dans le brevet US 6 332 976.

Lorsque la teneur en métaux dans la charge est trop importante (supérieure à 250 ppm) et/ou lorsque une conversion importante (transformation de la fraction lourde 540°C$^+$ (ou 370°C$^+$) en une fraction plus légère 540°C- (ou 370°C-) est recherchée, des procédés d'hydrotraitement en lit bouillonnant sont préférés. Dans ce type de procédé (cf M.S. Rana et al., Fuel 86 (2007), p.1216), les performances en purification sont moindres que celles des procédés RDS, mais l'hydroconversion de la fraction résidu est élevée (de l'ordre de 45-85 % en volume). Les températures importantes mises en jeu, comprises entre 415 et 440 °C, contribuent à cette hydroconversion élevée. Les réactions de craquage thermique sont en effet favorisées, le catalyseur n'ayant pas en général une fonction d'hydroconversion spécifique. De plus, les effluents formées par ce type de conversion peuvent présenter des problèmes de stabilité (formation de sédiments).

Pour l'hydrotraitement de résidus, le développement de catalyseurs polyvalents, performants et stables est donc indispensable.

Pour des procédés en lit bouillonnant, la demande de brevet WO 2010/002699 enseigne notamment qu'il est avantageux d'utiliser un catalyseur dont le support présente un diamètre de pore médian compris entre 10 et 14 nm et dont la distribution est étroite. Il y est précisé que moins de 5% du volume poreux doit être développé dans les pores de taille supérieure à 21 nm et de la même manière, moins de 10 % du volume doit être observé dans les petits pores de tailles inférieure à 9 nm. Le brevet US 5 968 348 confirme la préférence d'utilisation d'un support dont la mésoporosité reste voisine de 11 à 13 nm, avec éventuellement la présence de macropores et une surface BET élevée, ici au moins 175 m$^2$/g.

Pour des procédés en lit fixe, le brevet US 6 780 817 enseigne qu'il est nécessaire d'utiliser un support de catalyseur qui présente au moins 0,32 ml/g de volume macroporeux pour un fonctionnement stable en lit fixe. Un tel catalyseur présente de plus un diamètre médian, dans les mésopores, de 8 à 13 nm et une surface spécifique élevée d'au moins 180 m$^2$/g.

Le brevet US 6 919 294 décrit aussi l'utilisation de support dit bimodaux, donc méso et macroporeux, avec l'utilisation de forts volumes macroporeux, mais avec un volume mésoporeux limité à 0,4 ml/g au plus.

Les brevets US 4 976 848 et US 5 089 463 décrivent un catalyseur d'hydrodémétallation et hydrodésulfuration de charges lourdes comprenant une phase active hydrogénante à base de métaux des groupes VI et VIII et un support inorganique oxyde réfractaire, le catalyseur ayant précisément entre 5 et 11 % de son volume poreux sous forme de macropores et des mésopores de diamètre médian supérieur à 16,5 nm.

Le brevet US 7 169 294 décrit un catalyseur d'hydroconversion de charges lourdes, comprenant entre 7 et 20% de métal du groupe VI et entre 0,5 et 6% poids de métal du groupe VIII, sur un support aluminique. Le catalyseur a une surface spécifique comprise entre 100 et 180 m2/g, un volume poreux total supérieur ou égal à 0,55 ml/g, au moins 50 % du volume poreux total est compris dans les pores de taille supérieure à 20 nm, au moins 5 % du volume poreux total est compris dans les pores de taille supérieure à 100 nm, au moins 85 % du volume poreux total étant compris dans les pores de taille comprise entre 10 et 120 nm, moins de 2 % du volume poreux total étant contenu dans les pores de diamètre supérieur à 400 nm, et moins de 1 % du volume poreux total étant contenu dans les pores de diamètre supérieur à 1000 nm.

Le document US4460707 divulgue un catalyseur comprenant un ou plusieurs composants métalliques actifs sur un oxyde réfractaire poreux, ledit catalyseur ayant au moins environ 60% du volume total des pores répartis dans des pores dont le diamètre est compris entre 180 Å et 240 Å, l'essentiel de tous les pores ayant un diamètre supérieur d'environ 100 Å et moins de 10 % environ du volume total des pores se trouvant dans des pores d'un diamètre supérieur à 300 Å.

Le document US4267033 divulgue un catalyseur d'hydrotraitement comprenant au moins un métal du groupe VI (Cr, Mo W) et au moins un métal du groupe VIII déposés sur un support réfractaire poreux, ledit catalyseur ayant une surface spécifique de entre environ 100 et 300 m$^2$/g et un volume total des pores compris entre environ 0,3 et 1,0 cm$^3$/g, ledit catalyseur comprenant entre 20 et 40% en volume des pores dont le diamètre est compris entre 0 et 150 Å, entre 40 et 60% en volume des pores dont le diamètre est compris entre 150 et 200 Å et entre 10 et 30 % en volume des pores dont le diamètre est supérieure à 200 Å.

Le document GB 2069363 divulgue également un catalyseur d'hydrotraitement présentant une distribution de tailles de pores particulière.

De nombreux développements portent notamment sur l'optimisation de la distribution poreuse du catalyseur ou de mélanges de catalyseurs par l'optimisation du support aluminique de catalyseur.

Ainsi le brevet US 6 589 908 décrit par exemple un procédé de préparation d'une alumine caractérisée par une absence de macropores, moins de 5 % du volume poreux total constitué par les pores de diamètre supérieur à 35 nm, un haut volume poreux supérieur à 0,8 ml/g, et une distribution de mésopores bimodale dans laquelle les deux modes sont séparés par 1 à 20 nm et le mode poreux primaire étant plus grand que le diamètre médian poreux. A cet effet, le mode de préparation décrit met en œuvre deux étapes de précipitation de précurseurs d'alumine dans des conditions de température, pH et débits bien contrôlées. La première étape opère à une température comprise entre 25 et 60°C, un pH compris entre 3 et 10. La suspension est ensuite chauffée jusqu'à une température comprise entre 50 et 90°C. Des réactifs sont de nouveau ajoutés à la suspension, qui est ensuite lavée, séchée, mise en forme et calcinée pour former un support de catalyseur. Ledit support est ensuite imprégné par une solution de phase active pour obtenir un catalyseur d'hydrotraitement ; un catalyseur d'hydrotraitement de résidus sur un support monomodal mésoporeux de diamètre médian poreux autour de 20 nm est décrit.

Le brevet US 7 790 652 décrit des catalyseurs d'hydroconversion pouvant être obtenus par coprécipitation d'un gel d'alumine, puis introduction de métaux sur le support obtenu par toute méthode connue de l'homme du métier, notamment par imprégnation. Le catalyseur obtenu a une distribution monomodale mésoporeuse avec un diamètre médian mésoporeux compris entre 11 et 12,6 nm et une largeur de distribution poreuse inférieure à 3,3 nm.

Le document WO2005/028106 divulgue la préparation par précipitation d'un support alumine présentant une distribution poreuse bien spécifique, pouvant être utilisé comme support de catalyseur dans un procédé d'hydroconversion de charges hydrocarbonées lourdes. Cependant, ce document ne divulgue pas un procédé de préparation dans lequel on réalise une première étape de précipitation dans laquelle on a mis préalablement en solution un précurseur d'acide d'aluminium dans l'eau pour obtenir une suspension dont le pH est compris entre 0,5 et 5.

Au vu de l'art antérieur, il semble très difficile d'obtenir un catalyseur présentant à la fois un fort volume poreux total, un fort volume mésoporeux couplé à un volume macroporeux minimal, un diamètre médian des mésopores très élevé, et une phase active hydro-déshydrogénante. Par ailleurs, l'augmentation de la porosité se fait souvent au détriment de la surface spécifique, et de la résistance mécanique.

De manière surprenante, la demanderesse a découvert qu'un catalyseur préparé à partir d'une alumine résultant de la calcination d'un gel d'alumine spécifique présentant une dispersibilité faible, par imprégnation d'une phase active hydro-déshydrogénante sur l'alumine calcinée présentait une structure poreuse particulièrement intéressante tout en ayant une teneur en phase active adaptée pour l'hydrotraitement de charges lourdes, notamment pour les réactions d'hydrodémétallation.

## Objets de l'invention

La présente invention concerne un procédé de préparation d'un catalyseur d'hydroconversion comprenant :

- un support oxyde majoritairement aluminique calciné comprenant une teneur en alumine supérieure ou égale à 90% poids et une teneur en silice d'au plus 10% poids en équivalent $SiO_2$ par rapport à l'oxyde final ;
- une phase active hydro-déshydrogénante comprenant du molybdène, la teneur en élement molybdène, mesurée par fluorescence des rayons X, étant comprise entre 6 et 14% en poids de trioxyde de molybdène par rapport au poids total du catalyseur, éventuellement au moins un métal du groupe VIII de la classification périodique des éléments choisi parmi le nickel et/ou le cobalt, éventuellement du phosphore, ledit catalyseur présentant :
- une surface spécifique Sbet supérieure à 75 m2/g,
- un volume poreux total mesuré par porosimétrie au mercure supérieur ou égal à 0,55 ml/g,
- un diamètre médian mésoporeux en volume, mesuré par porosimétrie au mercure ,supérieur ou égal à 16 nm,
- un volume mésoporeux tel que mesuré par intrusion au porosimètre à mercure, supérieur ou égal à 0,50 ml/g,
- un volume macroporeux inférieur à 15 % du volume poreux total, mesuré par porosimétrie au mercure,
- un diamètre médian macroporeux, mesuré par porosimétrie au mercure, compris entre 60 et 200 nm,
- ledit volume mésoporeux, le volume poreux total et le volume macroporeux étant mesurés par porosité au mercure selon la norme ASTM D4284-83;

ledit procédé comprenant au moins les étapes suivantes :

a) une première étape de précipitation, en milieu réactionnel aqueux, d'au moins un précurseur basique et d'au moins un précurseur acide dans lequel au moins un des précurseurs basique ou acide comprend de l'aluminium, à un pH du milieu réactionnel compris entre 8,5 et 10,5 , le débit du ou des précurseurs acide et basique contenant de l'aluminium est réglé de manière à obtenir un taux d'avancement de la première étape compris entre 5 et 13 %, le taux d'avancement étant défini comme étant la proportion d'alumine formée en équivalent $Al_2O_3$ lors de ladite première étape de précipitation par rapport à la quantité totale d'alumine formée à l'issue de l'étape c) du procédé de préparation, ladite étape opérant à une température comprise entre 20 et 90°C et pendant une durée comprise entre 2 minutes et 30 minutes ;
b) une étape de chauffage de la suspension;
c) une deuxième étape de précipitation de la suspension obtenue à l'issue de l'étape de chauffage b) par ajout dans la suspension d'au moins un précurseur basique et d'au moins un précurseur acide dans lequel au moins un des précurseurs basique ou acide comprend de l'aluminium, le débit relatif des précurseurs acide et basique est choisi de manière à obtenir un pH du milieu réactionnel compris entre 8,5 et 10,5 et le débit du ou des précurseurs acide et basique contenant de l'aluminium étant réglé de manière à obtenir un taux d'avancement de la deuxième étape compris entre 87 et 95 %, le taux d'avancement étant défini comme étant la proportion d'alumine formée en équivalent $Al_2O_3$ lors de ladite deuxième étape de précipitation par rapport à la quantité totale d'alumine formée à l'issue de l'étape c) du procédé de préparation ;
d) une étape de filtration de la suspension obtenue à l'issue de l'étape c) de deuxième précipitation pour obtenir un gel d'alumine ;
e) une étape de séchage dudit gel d'alumine obtenu à l'étape d) pour obtenir une poudre ;
f) une étape de mise en forme de la poudre obtenue à l'issue de l'étape e) pour obtenir un matériau cru ;
g) une étape de traitement thermique du matériau cru obtenu à l'issue de l'étape f) pour obtenir un support oxyde aluminique ;

h) une étape d'imprégnation de la phase active hydro-déshydrogénante sur ledit support oxyde aluminique.

Un avantage de l'invention est de fournir un nouveau procédé de préparation d'un catalyseur imprégné sur un support oxyde aluminique mésoporeux amorphe à partir d'un gel d'alumine spécifique préparé selon un procédé comprenant au moins une étape de précipitation d'au moins un précurseur d'aluminium dans laquelle entre 5 et 13 % poids d'alumine seulement sont formés à la première étape de précipitation, par rapport à la quantité totale d'alumine formée en équivalent $Al_2O_3$ à l'issue dudit procédé de préparation du gel, ledit gel d'alumine spécifique présentant une dispersibilité avantageusement inférieure à 15%, et de préférence comprise entre 6 et 13%, et de manière très préférée comprise entre 6 et 10%.

Le catalyseur préparé par le procédé selon l'invention peut être utilisé dans les procédés d'hydrotraitement ou d'hydroconversion de charges hydrocarbonées lourdes, de préférence pour des charges contenant au plus 50 ppm et de manière très préférée entre 20 et 50 ppm de métaux cumulés, par exemple nickel et vanadium.

## Description de l'invention

### Résumé

L'invention concerne un procédé de préparation d'un catalyseur d'hydroconversion comprenant :

- un support oxyde majoritairement aluminique calciné comprenant une teneur en alumine supérieure ou égale à 90% poids et une teneur en silice d'au plus 10% poids en équivalent $SiO_2$ par rapport à l'oxyde final ;
- une phase active hydro-déshydrogénante comprenant du molybdène, la teneur en élément molybdène, mesurée par fluorescence des rayons X, étant comprise entre 6 et 14% en poids de trioxyde de molybdène par rapport au poids total du catalyseur, éventuellement au moins un métal du groupe VIII de la classification périodique des éléments choisi parmi le nickel et/ou le cobalt, éventuellement du phosphore, ledit catalyseur présentant :
- une surface spécifique Sbet supérieure à 75 m2/g,
- un volume poreux total mesuré par porosimétrie au mercure supérieur ou égal à 0,55 ml/g,
- un diamètre médian mésoporeux en volume, mesuré par porosimétrie au mercure ,supérieur ou égal à 16 nm,
- un volume mésoporeux tel que mesuré par intrusion au porosimètre à mercure, supérieur ou égal à 0,50 ml/g,
- un volume macroporeux inférieur à 15 % du volume poreux total, mesuré par porosimétrie au mercure,
- un diamètre médian macroporeux, mesuré par porosimétrie au mercure, compris entre 60 et 200 nm,
- ledit volume mésoporeux, le volume poreux total et le volume macroporeux étant mesurés par porosité au mercure selon la norme ASTM D4284-83;

ledit procédé comprenant au moins les étapes suivantes :

a) une première étape de précipitation, en milieu réactionnel aqueux, d'au moins un précurseur basique choisi parmi l'aluminate de sodium, l'aluminate de potassium, l'ammoniaque, l'hydroxyde de sodium et l'hydroxyde de potassium et d'au moins un précurseur acide choisi parmi le sulfate d'aluminium, le chlorure d'aluminium, le nitrate d'aluminium, l'acide sulfurique, l'acide chlorhydrique et l'acide nitrique, dans lequel au moins un des précurseurs basique ou acide comprend de l'aluminium, le débit relatif des précurseurs acide et basique est choisi de manière à obtenir un pH du milieu réactionnel compris entre 8,5 et 10,5 et le débit du ou des précurseurs acide et basique contenant de l'aluminium est réglé de manière à obtenir un taux d'avancement de la première étape compris entre 5 et 13%, le taux d'avancement étant défini comme étant la proportion d'alumine formée en équivalent $Al_2O_3$ lors de ladite première étape de précipitation par rapport à la quantité totale d'alumine formée à l'issue de l'étape c) du procédé de préparation, ladite étape opérant à une température comprise entre 20 et 90 °C et pendant une durée comprise entre 2 minutes et 30 minutes ;
b) une étape de chauffage de la suspension à une température comprise entre 40 et 90°C pendant une durée comprise entre 7 minutes et 45 minutes;
c) une deuxième étape de précipitation de la suspension obtenue à l'issue de l'étape de chauffage b) par ajout dans la suspension d'au moins un précurseur basique choisi parmi l'aluminate de sodium, l'aluminate de potassium, l'ammoniaque, l'hydroxyde de sodium et l'hydroxyde de potassium et d'au moins un précurseur acide choisi parmi le sulfate d'aluminium, le chlorure d'aluminium, le nitrate d'aluminium, l'acide sulfurique, l'acide chlorhydrique et l'acide nitrique, dans lequel au moins un des précurseurs basique ou acide comprend de l'aluminium, le débit relatif des précurseurs acide et basique est choisi de manière à obtenir un pH du milieu réactionnel compris entre 8,5 et 10,5 et le débit du ou des précurseurs acide et basique contenant de l'aluminium est réglé de manière à obtenir un taux d'avancement de la deuxième étape compris entre 87 et 95 %, le taux d'avancement étant défini comme étant la proportion d'alumine formée en équivalent $Al_2O_3$ lors de ladite deuxième étape de précipitation par rapport à la quantité totale d'alumine formée à l'issue de l'étape c) du procédé de préparation, ladite étape opérant à une température comprise entre 40 et 90 °C et pendant une durée comprise entre 2 minutes et 50 minutes ;

d) une étape de filtration de la suspension obtenue à l'issue de l'étape c) de deuxième précipitation pour obtenir un gel d'alumine ;

e) une étape de séchage dudit gel d'alumine obtenu à l'étape d) pour obtenir une poudre ;

f) une étape de mise en forme de la poudre obtenue à l'issue de l'étape e) pour obtenir un matériau cru ;

g) une étape de traitement thermique du matériau cru obtenu à l'issue de l'étape f) à une température comprise entre 500 et 1000°C, en présence ou non d'un flux d'air contenant jusqu'à 60% en volume d'eau, pour obtenir un support oxyde aluminique ;

h) une étape d'imprégnation de la phase active hydro-déhydrogénante sur ledit support oxyde aluminique.

De préférence, le taux d'avancement de la première étape de précipitation a) est compris entre 6 et 12%, de manière très préférée compris entre 7 et 11%.

De préférence, le précurseur basique est l'aluminate de sodium.

De préférence, le précurseur acide est le sulfate d'aluminium.

Avantageusement, dans la première étape de précipitation le milieu réactionnel aqueux est de l'eau et ladite étape opère sous agitation, en l'absence d'additif organique.

De préférence, ledit catalyseur présente :

- une surface spécifique Sbet supérieure à 100 m$^2$/g,
- un diamètre médian mésoporeux en volume supérieur ou égal à 18 nm,
- un volume mésoporeux tel que mesuré par intrusion au porosimètre à mercure, compris entre 0,55 ml/g et 0,85 ml/g
- un volume poreux total mesuré par porosimétrie au mercure supérieur ou égal à 0,60 ml/g,
- un volume macroporeux inférieur à 10 % du volume poreux total
- une absence de micropores.

De manière très préférée, le volume macroporeux est inférieur à 5 % du volume poreux total.

De préférence, le catalyseur présente un diamètre médian mésoporeux en volume déterminé par intrusion au porosimètre à mercure compris entre 20 et 25 nm.

La teneur en molybdène est comprise entre 6 et 14% poids de trioxyde de molybdène par rapport à la masse totale du catalyseur, la teneur en métal du groupe VIII est comprise entre 0,0 et 5,0 % en poids de l'oxyde de métal du groupe VIII par rapport à la masse totale du catalyseur, la teneur en élément phosphore est comprise entre 0 à 7% en poids de pentoxyde de phosphore par rapport à la masse totale du catalyseur.

La phase active hydro-déshydrogénante peut être composée de molybdène ou de nickel et de molybdène ou de cobalt et de molybdène.

De préférence, la phase active hydrodéshydrogénante comprend également du phosphore.

Le catalyseur préparé selon le procédé de l'invention peut être utilisé dans un procédé d'hydrotraitement d'une charge hydrocarbonée lourde choisie parmi les résidus atmosphériques, les résidus sous vide issus de la distillation directe, les huiles désasphaltées, les résidus issus des procédés de conversions tels que par exemple ceux provenant du coking, d'une hydroconversion en lit fixe, en lit bouillonnant ou encore en lit mobile, pris seuls ou en mélange, comprenant la mise en contact de ladite charge avec de l'hydrogène et un catalyseur d'hydroconversion préparé selon le procédé de préparation ci-dessus.

Ledit procédé peut être réalisé en lit bouillonnant à une température comprise entre 320 et 450°C, sous une pression partielle d'hydrogène comprise entre 3 MPa et 30 MPa, à une vitesse spatiale comprise entre 0,1 et 10 volumes de charge par volume de catalyseur et par heure, et avec un rapport hydrogène gazeux sur charge liquide d'hydrocarbures avantageusement compris entre 100 et 3000 normaux mètres cubes par mètres cubes.

Ledit procédé peut être réalisé en lit fixe à une température comprise entre 320°C et 450°C, sous une pression partielle en hydrogène comprise entre 3 MPa et 30 MPa, à une vitesse spatiale comprise entre 0,05 et 5 volume de charge par volume de catalyseur et par heure, et avec un rapport hydrogène gazeux sur charge liquide d'hydrocarbures compris entre 200 et 5000 normaux mètres cubes par mètres cubes.

Ledit procédé peut être un procédé d'hydrotraitement d'une charge hydrocarbonée lourde de type résidus en lit fixe comprenant au moins :

a) une étape d'hydrodémétallation ;

b) une étape d'hydrodésulfuration ;

dans lequel ledit catalyseur d'hydroconversion est utilisé dans au moins une desdites étapes a) et b).

Le procédé peut notamment être un procédé d'hydrotraitement de charge hydrocarbonée lourde de type résidus en lit fixe dans lequel :

- la charge a une teneur cumulée en métaux, initiale ou après hydrotraitement préalable sur un ou plusieurs autres catalyseurs d'hydrodémétallation, inférieure ou égale à 50 ppm ;
- et dans lequel ledit catalyseur d'hydroconversion est utilisé dans l'étape d'hydrodémétallation.

## Liste des figures

Les figures sont présentées à titre illustratif et se rapportent à l'exemple 5.

La Figure 1 présente l'évolution à 300 heures des performances en hydrodémétallation HDM relatives des catalyseurs A1, B1, et C1 sur une charge comprenant un mélange de résidu atmosphérique et de résidu sous vide (RAAM/RSVAL, préalablement hydrotraitée).

La Figure 2 présente l'évolution à 300 heures des performances en hydrodésulfuration HDS relatives des catalyseurs A1, B1, et C1 sur une charge comprenant un mélange de résidu atmosphérique et de résidu sous vide (RAAM/RSVAL, préalablement hydrotraitée).

## Terminologie et techniques de caractérisation

Dans toute la suite du texte, la dispersibilité est définie comme le poids de solide ou gel d'alumine peptisée que l'on ne peut pas disperser par centrifugation dans un tube en polypropylène à 3600G pendant 3 min.

Le catalyseur et le support de la présente invention présentent une distribution poreuse spécifique, où les volumes macroporeux et mésoporeux sont mesurés par intrusion de mercure et le volume microporeux est mesuré par adsorption d'azote.

Par « macropores », on entend des pores dont l'ouverture est supérieure à 50 nm.

Par « mésopores », on entend des pores dont l'ouverture est comprise entre 2 nm et 50 nm, bornes incluses.

Par « micropores », on entend des pores dont l'ouverture est inférieure à 2 nm.

Dans l'exposé qui suit de l'invention, on entend par surface spécifique, la surface spécifique B.E.T. déterminée par adsorption d'azote conformément à la norme ASTM D 3663-78 établie à partir de la méthode BRUNAUER-EMMETT-TELLER décrite dans le périodique « The Journal of American Society », 60, 309, (1938).

Dans l'exposé qui suit de l'invention, on entend par volume poreux total de l'alumine ou du support ou du catalyseur, le volume mesuré par intrusion au porosimètre à mercure selon la norme ASTM D4284-83 à une pression maximale de 4000 bar (400 MPa), utilisant une tension de surface de 484 dyne/cm et un angle de contact de 140°. L'angle de mouillage a été pris égal à 140° en suivant les recommandations de l'ouvrage «Techniques de l'ingénieur, traité analyse et caractérisation », P 1050-5, écrits par Jean Charpin et Bernard Rasneur.

Afin d'obtenir une meilleure précision, la valeur du volume poreux total en ml/g donnée dans le texte qui suit correspond à la valeur du volume mercure total (volume poreux total mesuré par intrusion au porosimètre à mercure) en ml/g mesurée sur l'échantillon moins la valeur du volume mercure en ml/g mesurée sur le même échantillon pour une pression correspondant à 30 psi (environ 0,2 MPa).

Le volume des macropores et des mésopores est mesuré par porosimétrie par intrusion de mercure selon la norme ASTM D4284-83 à une pression maximale de 4000 bar (400 MPa), utilisant une tension de surface de 484 dyne/cm et un angle de contact de 140°.

On fixe à 0,2 MPa la valeur à partir de laquelle le mercure remplit tous les vides intergranulaires, et on considère qu'au-delà le mercure pénètre dans les pores de l'échantillon.

Le volume macroporeux du catalyseur ou du support est défini comme étant le volume cumulé de mercure introduit à une pression comprise entre 0,2 MPa et 30 MPa, correspondant au volume contenu dans les pores de diamètre apparent supérieur à 50 nm.

Le volume mésoporeux du catalyseur ou du support est défini comme étant le volume cumulé de mercure introduit à une pression comprise entre 30 MPa et 400 MPa, correspondant au volume contenu dans les pores de diamètre apparent compris entre 2 et 50 nm.

Le volume des micropores est mesuré par porosimétrie à l'azote. L'analyse quantitative de la microporosité est effectuée à partir de la méthode "t" (méthode de Lippens-De Boer, 1965) qui correspond à une transformée de l'isotherme d'adsorption de départ comme décrit dans l'ouvrage « Adsorption by powders and porous solids. Principles, methodology and applications » écrit par F. Rouquérol, J. Rouquérol et K. Sing, Academic Press, 1999.

On définit également le diamètre médian mésoporeux comme étant un diamètre tel que tous les pores de taille inférieure à ce diamètre constituent 50% du volume mésoporeux total déterminé par intrusion au porosimètre à mercure.

On définit également le diamètre médian macroporeux comme étant un diamètre tel que tous les pores de taille inférieure à ce diamètre constituent 50% du volume macroporeux total déterminé par intrusion au porosimètre à mercure.

Dans la suite, les groupes d'éléments chimiques sont donnés selon la classification CAS (CRC Handbook of Chemistry and Physics, éditeur CRC press, rédacteur en chef D.R. Lide, 81ème édition, 2000-2001). Par exemple, le groupe VIII selon la classification CAS correspond aux métaux des colonnes 8, 9 et 10 selon la nouvelle classification IUPAC.

## Description détaillée de l'invention

La demanderesse a découvert que la combinaison de molybdène, éventuellement au moins un métal du groupe VIII de la classification périodique des élément choisi parmi le cobalt et/ou le nickel, et l'élément phosphore avec un oxyde aluminique qui présente simultanément un volume poreux élevé (>0.75 ml/g), un diamètre médian des mésopores élevé (supérieur ou égal à 16 nm), et ainsi une surface BET supérieure à 75 m2/g, de préférence supérieure à 100 m2/g, conduit à un catalyseur à propriétés texturales particulières qui présente un gain significatif d'hydrodémétallation dans un procédé en lit fixe ou dans un procédé en lit bouillonnant traitant des charges contenant avantageusement une teneur de métaux cumulés (nickel et vanadium) inférieure ou égale à 50 ppm. Le support aluminique mésoporeux amorphe provient de la mise en forme d'un gel d'alumine présentant une faible dispersibilité, ledit gel d'alumine étant obtenu par précipitation d'au moins un sel d'aluminium.

Un gain de stabilité dans le temps important est aussi observé, lorsque l'on utilise le catalyseur sur une charge contenant au plus 50 ppm de métaux, nickel et vanadium cumulés, ou en chargement en aval d'un premier catalyseur d'hydrodémétallation, si la charge résidus est trop fortement chargée.

Par voie de conséquence, ce type de catalyseur peut aussi être utilisé au sein d'un enchaînement catalytique dans lequel il traite un effluent de résidus contenant initialement plus de 50 ppm de métaux, mais dont le traitement préalable par un ou plusieurs catalyseurs de l'art antérieur conduit à abaisser la teneur en métaux entre 20 et 50 ppm.

## Description générale du catalyseur

Le catalyseur susceptible d'être préparé selon l'invention se présente sous la forme d'un support oxyde majoritairement aluminique calciné sur lequel sont répartis les métaux de la phase active. Le support fait l'objet de caractéristiques spécifiques qui sont décrites ci-après, tout comme, dans une moindre mesure, la phase active et sa formulation. On décrit aussi plus loin, selon l'invention, leur préparation ainsi que l'utilisation du catalyseur dans des procédés d'hydrotraitement de charges hydrocarbonées lourdes.

Les métaux du groupe VIII sont choisis parmi le nickel ou le cobalt, ou une combinaison des deux.

Les quantités respectives en métal du molybdène et en métal du groupe VIII sont avantageusement telles que le rapport atomique métal(aux) du groupe VIII sur molybdène (VIII/Mo) soit compris entre 0:1 et 0,7:1, de préférence 0.05:1 et 0,7:1, de manière très préférée entre 0,1:1 et 0,6:1 et de manière encore plus préférée entre 0,2:1 et 0,5:1. Ce rapport peut notamment être ajusté selon le type de charge et le procédé utilisé.

Les quantités respectives en molybdène et en phosphore sont avantageusement telles que le rapport atomique phosphore sur molybdène (P/Mo) soit compris entre 0,2:1 et 1,0:1, de préférence entre 0,4:1 et 0,9:1 et de manière encore plus préférée entre 0,5;1.0 et 0,85:1.

La teneur en molybdène est comprise entre 6 et 14% poids de trioxyde de molybdène par rapport à la masse totale du catalyseur, de préférence entre 7 et 12% et de manière encore plus préférée entre 8 et 11% poids.

La teneur en métal du groupe VIII est avantageusement comprise entre 0 et 5,0%, de préférence entre 0,4 et 5,0% en poids de l'oxyde d'au moins du métal du groupe VIII par rapport à la masse totale du catalyseur, de manière très préférée entre 0,6 et 3,7%, et de manière encore plus préférée entre 1,2 et 2,8% poids.

La teneur en élément phosphore est avantageusement comprise entre 0 et 7,0% en poids, de préférence entre 0,6 et 7,0% en poids de pentaoxyde de phosphore par rapport à la masse totale du catalyseur, de manière très préférée entre 1,4 et 5,3% poids et de manière encore plus préférée entre 2,0 et 4,6%poids.

L'oxyde de type aluminique poreux constituant majoritairement le support dudit catalyseur se caractérise par une teneur en alumine supérieure supérieure ou égale à 90% et une teneur en silice en équivalent $SiO_2$ d'au plus 10% poids par rapport à l'oxyde final, de préférence par une teneur en silice comprise inférieure à 5% poids, de manière très préférée une teneur inférieure à 2% et de manière encore plus préférée l'oxyde ne contient rien d'autre que de l'alumine.

Ledit catalyseur est généralement présenté sous toutes les formes connues de l'Homme du métier. De préférence, il sera constitué d'extrudés de diamètre généralement compris entre 0,5 et 10 mm, de préférence entre 0,8 et 3,2 mm et de manière très préférée entre 1,0 et 2,5 mm. Celui-ci peut-être avantageusement présenté sous la forme d'extrudés cylindrique, trilobés ou quadrilobés. De préférence sa forme sera trilobée ou quadrilobée. La forme des lobes pourra être ajustée selon toutes les méthodes connues de l'art antérieur.

## Caractéristiques du support

Le support du catalyseur comprend de manière majoritaire un oxyde poreux aluminique, De préférence le support est constitué exclusivement d'alumine.

Le support oxyde poreux aluminique dudit catalyseur comporte généralement une teneur en alumine supérieure ou égale à 90% et une teneur en silice en équivalent $SiO_2$ d'au plus 10% poids par rapport à l'oxyde final, de préférence une teneur en silice comprise inférieure à 5% poids, de manière très préférée une teneur inférieure à 2 % poids.

La silice peut être introduite par toute technique connue de l'homme du métier, par exemple lors de la synthèse du gel d'alumine ou pendant l'étape de comalaxage.

Le support utilisé pour la préparation du catalyseur présente avantageusement un volume poreux total (VPT) d'au moins 0,75 ml/g, de préférence d'au moins 0,78 ml/g, et de manière très préférée d'au moins 0,8 ml/g.

Le support présente avantageusement un volume macroporeux, $V_{50nm}$, défini comme le volume des pores de diamètre supérieur à 50 nm, inférieur à 10 % du volume poreux total et de préférence inférieur à 5 % du volume poreux total, et de manière très préférée inférieur à 3% du volume poreux total.

Le support présente avantageusement un volume mésoporeux, $V_{méso}$, défini comme le volume des pores de diamètre compris entre 2 et 50 nm, d'au moins 0,50 ml/g, et de préférence d'au moins 0,70 ml/g , et de manière très préférée entre 0,70 et 0,90 ml/g.

Le diamètre médian mésoporeux du support (ou $D_{pméso}$) est avantageusement supérieur ou égal à 16 nm, de préférence supérieur ou égal à 18 nm, de manière très préférée supérieur ou égal à 20 nm, et de manière encore plus préférée compris entre 21 nm et 23 nm, bornes incluses.

Le support du catalyseur présente avantageusement une surface spécifique BET (SS) supérieure à 75 $m^2$/g, de préférence supérieure à 100 $m^2$/g, de manière très préférée supérieure à 130 $m^2$/g. On entend par surface BET, la surface spécifique déterminée par adsorption d'azote conformément à la norme ASTM D 3663-78 établie à partir de la méthode BRUNAUER - EMMET - TELLER décrite dans le périodique "The journal of the American Chemical Society", 60, 309 (1938).

## Caractéristiques du catalyseur

Le catalyseur fini, c'est-à-dire avec les métaux déposés sur sa surface par toute méthode connue de l'Homme du métier, comme cela est décrit ci-après, présente en conséquence les propriétés texturales à suivre.

Le catalyseur présente avantageusement un volume poreux total (VPT) d'au moins 0,55 ml/g et de préférence d'au moins 0,60 ml/g tel que déterminé par intrusion au porosimètre à mercure. Dans un mode de réalisation préféré, le catalyseur présente entre 0,60 et 0,85 ml/g de volume poreux total, bornes incluses.

Le catalyseur présente avantageusement un volume macroporeux, $V_{50nm}$ inférieur à 15% du volume poreux total et de préférence inférieur à 10% du volume poreux total. Dans un mode de réalisation très préféré, le volume macroporeux représente moins de 5 % du volume poreux total.

Le volume mésoporeux, $V_{méso}$, du catalyseur est d'au moins 0,50 ml/g, et de préférence compris entre 0,55 ml/g et 0,85 ml/g, et de manière très préférée compris entre 0,60 ml/g et 0,80 ml/g, bornes incluses.

Le diamètre médian mésoporeux ($D_{p\ méso}$) est avantageusement supérieur ou égal à 16 nm, de manière préférée supérieur ou égal à 18 nm, et de manière très préférée supérieur ou égal à 20 nm.

Avantageusement, le diamètre médian mésoporeux ($D_{p\ méso}$) du catalyseur est compris entre 20 nm et 28 nm et de préférence entre 20 et 25 nm, bornes incluses.

Lorsque des macropores sont présents, le diamètre médian macroporeux est avantageusement compris entre 60 et 200 nm, de préférence entre 60 et 120 nm.

Le catalyseur présente avantageusement une surface spécifique BET (SS) d'au moins 75 $m^2$/g, de préférence d'au moins 100 $m^2$/g et de manière encore plus préférée comprise entre 110 et 150 $m^2$/g.

## Préparation du support oxyde du catalyseur.

L'oxyde poreux aluminique utilisé dans le support du catalyseur est un oxyde poreux aluminique à mésoporosité contrôlée présentant une bonne stabilité thermique et chimique, ayant une distribution en taille des mésopores centrée, uniforme, monomodale, et contrôlée.

L'oxyde poreux aluminique présente avantageusement une surface spécifique et un volume poreux et en particulier mésoporeux calibrés.

De préférence, l'oxyde poreux aluminique mésoporeux est dépourvu de micropores.

De préférence, l'oxyde poreux aluminique présente avantageusement une surface spécifique supérieure à 75 $m^2$/g.

De manière très préférée, la surface spécifique de l'oxyde poreux aluminique est supérieure à 100 $m^2$/g.

De manière encore plus préférée, la surface spécifique de l'oxyde poreux aluminique est supérieure à 125 $m^2$/g.

Le volume mésoporeux, défini comme étant le volume compris dans les pores ayant un diamètre moyen compris entre 2 et 50 nm, est mesuré par porosimétrie au mercure. Le volume mésoporeux de l'oxyde poreux aluminique est supérieur ou égal à 0,5 ml/g, de manière très préférée supérieur ou égal à 0,7 ml/g et de manière encore plus préférée compris entre 0,70 ml/g et 0,90 ml/g, bornes incluses.

Le support oxyde poreux aluminique dudit catalyseur comporte généralement une teneur en alumine supérieure ou égale à 90% et une teneur en silice d'au plus 10% poids en équivalent $SiO_2$ par rapport à l'oxyde final, de préférence une teneur en silice comprise inférieure à 5% poids, de manière très préférée une teneur inférieure à 2 % poids. La silice peut être introduite par toute technique connue de l'homme du métier, par exemple lors de la synthèse du gel d'alumine ou pendant l'étape de comalaxage.

De préférence, le support oxyde aluminique est constitué exclusivement d'alumine.

De manière très préférée, le support oxyde aluminique est une alumine non mésostructurée.

Le procédé de préparation du support oxyde poreux aluminique du catalyseur comprend une première étape a) de précipitation, une étape b) de chauffage, une étape c) de deuxième précipitation, une étape d) de filtration, une étape e) de séchage, une étape f) de mise en forme, une étape g) de traitement thermique.

Le taux d'avancement pour chacune des étapes de précipitation est défini comme étant la proportion d'alumine formée en équivalent $Al_2O_3$ lors de ladite première ou deuxième étape de précipitation par rapport à la quantité totale d'alumine formée en équivalent $Al_2O_3$ à l'issue des deux étapes de précipitation et plus généralement à l'issue des étapes de préparation du gel d'alumine et notamment à l'issue de l'étape c) du procédé de préparation selon l'invention.

**Étape a) : première précipitation**

Cette étape consiste en la mise en contact, en milieu réactionnel aqueux, d'au moins un précurseur basique choisi parmi l'aluminate de sodium, l'aluminate de potassium, l'ammoniaque, l'hydroxyde de sodium et l'hydroxyde de potassium et d'au moins un précurseur acide choisi parmi le sulfate d'aluminium, le chlorure d'aluminium, le nitrate d'aluminium, l'acide sulfurique, l'acide chlorhydrique, et l'acide nitrique, dans laquelle au moins l'un des précurseurs basique ou acide comprend de l'aluminium, le débit relatif des précurseurs acide et basique est choisi de manière à obtenir un pH du milieu réactionnel compris entre 8,5 et 10,5 et le débit du ou des précurseurs acide et basique contenant de l'aluminium est réglé de manière à obtenir un taux d'avancement de la première étape compris entre 5 et 13%, le taux d'avancement étant défini comme étant la proportion d'alumine formée en équivalent $Al_2O_3$ lors de ladite première étape de précipitation par rapport à la quantité totale d'alumine formée en équivalent $Al_2O_3$ à l'issue de l'étape c) du procédé de préparation, ladite étape opérant à une température comprise entre 20 et 90 °C, et pendant une durée comprise entre 2 minutes et 30 minutes.

Le mélange dans le milieu réactionnel aqueux d'au moins un précurseur basique et d'au moins un précurseur acide nécessite qu'au moins un des précurseurs acide ou basique comprenne de l'aluminium. Il est également possible qu'au moins deux des précurseurs basique et acide comprennent de l'aluminium.

Les précurseurs basiques comprenant de l'aluminium sont l'aluminate de sodium et l'aluminate de potassium. Le précurseur basique préféré est l'aluminate de sodium.

Les précurseurs acides comprenant de l'aluminium sont le sulfate d'aluminium, le chlorure d'aluminium et le nitrate d'aluminium. Le précurseur acide préféré est le sulfate d'aluminium.

De préférence, le milieu réactionnel aqueux est de l'eau.

De préférence, ladite étape a) opère sous agitation.

De préférence, ladite étape a) est réalisée en l'absence d'additif organique.

Les précurseurs acide et basique, qu'ils contiennent de l'aluminium ou pas, sont mélangés, de préférence en solution, dans le milieu réactionnel aqueux, dans des proportions telles que le pH de la suspension résultante est compris entre 8,5 et 10,5.

Conformément à l'invention, les précurseurs acides d'alumine et les précurseurs basiques d'alumine peuvent être utilisés seuls ou en mélange dans l'étape de précipitation.

Conformément à l'invention, le débit relatif des précurseurs acide et basique qu'ils contiennent de l'aluminium ou pas, est choisi de manière à obtenir un pH du milieu réactionnel compris entre 8,5 et 10,5.

Dans le cas préféré où les précurseurs basique et acide sont respectivement l'aluminate de sodium et le sulfate d'aluminium, le ratio massique dudit précurseur basique sur ledit précurseur acide est avantageusement compris entre 1,60 et 2,05.

Pour les autres précurseurs basique et acide, qu'ils contiennent de l'aluminium ou pas, les ratio massiques base/acide sont établis par une courbe de neutralisation de la base par l'acide. Une telle courbe est obtenue aisément par l'homme du métier.

De préférence, ladite étape a) de précipitation est réalisée à un pH compris entre 8,5 et 10,0 et de manière très préférée entre 8,7 et 9,9.

De préférence, la première étape a) de précipitation est réalisée à une température compris entre 20 et 90°C, de manière préférée entre 20 et 70 °C et de manière plus préférée entre 30 et 50°C.

De préférence, la première étape a) de précipitation est réalisée à un pH compris entre 8 et 10,5, de préférence entre 8 et 10,5, de manière préférée entre 8,5 et 10 et de manière très préférée entre 8,7 et 9,9.

De préférence, la première étape a) de précipitation est réalisée pendant une durée comprise entre 5 et 20 minutes, et de manière préférée de 5 à 15 minutes.

Selon l'invention, le taux d'avancement de ladite première étape de précipitation a) est compris entre 5 et 13%, de préférence entre 6 et 12 % et de préférence entre 7 et 11%. Le taux d'avancement est défini comme étant la proportion d'alumine formée en équivalent Al2O3 lors de ladite première étape de précipitation par rapport à la quantité totale d'alumine formée en équivalent $Al_2O_3$ à l'issue de l'étape c) du procédé de préparation.

Les précurseurs acide et basique contenant de l'aluminium sont donc introduits dans des quantités permettant d'obtenir une suspension contenant la quantité désirée d'alumine, en fonction de la concentration finale en alumine à atteindre. En particulier, ladite étape a) permet l'obtention de 5 à 13 % poids d'alumine par rapport à la quantité totale d'alumine formée en équivalent $Al_2O_3$ à l'issue de l'étape c) du procédé de préparation.

### Étape b) : chauffage

Conformément à l'invention, ledit procédé de préparation comprend une étape b) de chauffage de la suspension obtenue à l'issue de la première étape a) de précipitation.

Selon l'invention, avant que la deuxième étape de précipitation ne soit mise en œuvre, une étape de chauffage de la suspension obtenue à l'issue de l'étape a) de précipitation est mise en œuvre entre les deux étapes de précipitation.

De préférence, ladite étape de chauffage de la suspension obtenue à l'issue de l'étape a), mise en œuvre entre ladite première étape de précipitation a) et la deuxième étape de précipitation c) opère à une température comprise entre 40 et 90°C, de préférence entre 40 et 80°C, de manière préférée entre 40 et 70°C et de manière très préférée entre 40 et 65°C.

De préférence, ladite étape de chauffage est mise en œuvre pendant une durée comprise entre 7 et 45 minutes et de préférence entre 7 et 35 minutes.

Ladite étape de chauffage est avantageusement mise en œuvre selon toutes les méthodes de chauffage connues de l'homme du métier.

### Étape c) : deuxième précipitation

Selon l'invention, ledit procédé de préparation comprend une deuxième étape de précipitation de la suspension chauffée obtenue à l'issue de l'étape b) de chauffage, ladite deuxième étape opérant par ajout dans ladite suspension d'au moins un précurseur basique choisi parmi l'aluminate de sodium, l'aluminate de potassium, l'ammoniaque, l'hydroxyde de sodium et l'hydroxyde de potassium et d'au moins un précurseur acide choisi parmi le sulfate d'aluminium, le chlorure d'aluminium, le nitrate d'aluminium, l'acide sulfurique, l'acide chlorhydrique, et l'acide nitrique, dans laquelle au moins l'un des précurseurs basique ou acide comprend de l'aluminium, le débit relatif des précurseurs acide et basique est choisi de manière à obtenir un pH du milieu réactionnel compris entre 8,5 et 10,5 et le débit du ou des précurseurs acide et basique contenant de l'aluminium est réglé de manière à obtenir un taux d'avancement de la deuxième étape compris entre 87 et 95%, le taux d'avancement étant défini comme étant la proportion d'alumine formée en équivalent $Al_2O_3$ lors de ladite deuxième étape de précipitation par rapport à la quantité totale d'alumine formée en équivalent $Al_2O_3$ à l'issue de l'étape c) du procédé de préparation, ladite étape opérant à une température comprise entre 40 et 90 °C, et pendant une durée comprise entre 2 minutes et 50 minutes.

Le ou les précurseur(s) basique(s) et acide(s) sont ajoutés dans ladite deuxième étape de co-précipitation en solution aqueuse.

De même que dans la première étape de précipitation a), l'ajout dans la suspension chauffée, d'au moins un précurseur basique et d'au moins un précurseur acide nécessite qu'au moins un des précurseurs basique ou acide comprenne de l'aluminium. Il est également possible qu'au moins deux des précurseurs basiques et acides comprennent de l'aluminium.

Les précurseurs basiques comprenant de l'aluminium sont l'aluminate de sodium et l'aluminate de potassium. Le précurseur basique préféré est l'aluminate de sodium.

Les précurseurs acides comprenant de l'aluminium sont le sulfate d'aluminium, le chlorure d'aluminium et le nitrate d'aluminium. Le précurseur acide préféré est le sulfate d'aluminium.

De préférence, ladite deuxième étape de précipitation opère sous agitation.

De préférence, ladite deuxième étape est réalisée en l'absence d'additif organique.

Les précurseurs acides et basiques, qu'ils contiennent de l'aluminium ou pas, sont mélangés, de préférence en solution, dans la suspension, dans des proportions telles que le pH de la suspension résultante est compris entre 8,5 et 10,5.

De même que dans l'étape a) de précipitation, le débit relatif des précurseurs acides et basiques, qu'ils contiennent de l'aluminium ou pas, est choisi de manière à obtenir un pH du milieu réactionnel compris entre 8,5 et 10,5, de préférence compris entre 8,5 et 10, de manière encore plus préférée entre 8,7 et 9,9.

Dans le cas préféré où les précurseurs basique et acide sont respectivement l'aluminate de sodium et le sulfate d'aluminium, le ratio massique dudit précurseur basique sur ledit précurseur acide est avantageusement compris entre 1,60 et 2,05.

Pour les autres précurseurs basique et acide, qu'ils contiennent de l'aluminium ou pas, les ratio massique base/acide sont établis par une courbe de neutralisation de la base par l'acide. Une telle courbe est obtenue aisément par l'homme du métier.

De préférence, ladite deuxième étape de précipitation est réalisée à un pH compris entre 8,5 et 10,0 et de manière préférée entre 8,7 et 9,9.

Les précurseurs d'aluminium sont également mélangés dans des quantités permettant d'obtenir une suspension contenant la quantité désirée d'alumine, en fonction de la concentration finale en alumine à atteindre. En particulier, ladite deuxième étape de précipitation permet l'obtention de 87 à 95% poids d'alumine par rapport à la quantité totale d'alumine formée en équivalent $Al_2O_3$ à l'issue des deux étapes de précipitation.

De même que dans l'étape a) de précipitation, c'est le débit du ou des précurseurs acide et basique contenant de l'aluminium qui est réglé de manière à obtenir un taux d'avancement de la deuxième étape compris entre 87 et 95%, de préférence entre 88 et 94 %, de manière très préférée entre 89 et 93 %, le taux d'avancement étant défini comme étant la proportion d'alumine formée en équivalent $Al_2O_3$ lors de ladite deuxième étape de précipitation par rapport à la quantité totale d'alumine formée en équivalent $Al_2O_3$ à l'issue de l'étape c) du procédé de préparation.

Ainsi, en fonction de la concentration en alumine visée à l'issue des étapes de précipitation, de préférence comprise entre 20 et 100 g/l, les quantités d'aluminium devant être apportées par les précurseurs acide et/ou basique sont calculées et le débit des précurseurs est réglé en fonction de la concentration desdits précurseurs en aluminium ajoutés, de la quantité d'eau ajoutée dans le milieu réactionnel et du taux d'avancement requis pour chacune des étapes de précipitation.

De même que dans l'étape a) de précipitation, les débits du ou des précurseurs acide et/ou basique contenant de l'aluminium dépendent de la dimension du réacteur utilisé et ainsi de la quantité d'eau ajoutée dans le milieu réactionnel.

A titre d'exemple, si on travaille dans un réacteur de 3 litres et que l'on vise 1 litre de suspension d'alumine de concentration finale en $Al_2O_3$ de 50 g/l, avec un taux d'avancement ciblé de 10% pour la première étape de précipitation, 10% de l'alumine totale doit être apportée lors de l'étape a) de précipitation. Les précurseurs d'alumines sont l'aluminate de sodium à une concentration de 155 g/l en $Al_2O_3$ et le sulfate d'aluminium à une concentration de 102 g/l en $Al_2O_3$. Le pH de précipitation de la première étape est fixé à 9,5 et le pH de la deuxième étape à 9. La quantité d'eau ajoutée dans le réacteur est de 620 ml.

Pour la première étape a) de précipitation opérant à 30°C et pendant 8 minutes, le débit de sulfate d'aluminium doit être de 2,1 ml/min et le débit d'aluminate de sodium est de 2,6 ml/min. Le ratio massique d'aluminate de sodium sur sulfate d'aluminium est donc de 1,91.

Pour la deuxième étape de précipitation, opérant à 70°C, pendant 30 minutes, le débit de sulfate d'aluminium doit être de 5,2 ml/min et le débit d'aluminate de sodium est de 6,3 ml/min. Le ratio massique d'aluminate de sodium sur sulfate d'aluminium est donc de 1,84.

De préférence, la deuxième étape de précipitation est réalisée à une température comprise entre 40 et 80 °C, de manière préférée entre 45 et 70°C et de manière très préférée entre 50 et 70°C.

De préférence, la deuxième étape de précipitation est réalisée pendant une durée comprise entre 5 et 45 minutes, et de manière préférée de 7 à 40 minutes.

La deuxième étape de précipitation permet généralement l'obtention d'une suspension d'alumine ayant une concentration en $Al_2O_3$ comprise entre 20 et 100 g/l, de préférence entre 20 et 80g/l, de manière préférée entre 20 et 50g/l.

**Étape d) : filtration**

Le procédé de préparation d'alumine selon l'invention comprend également une étape de filtration de la suspension obtenue à l'issue de l'étape c) de deuxième précipitation. Ladite étape de filtration est réalisée selon les méthodes connues de l'homme du métier.

La filtrabilité de la suspension obtenue à l'issue des deux étapes de précipitation est améliorée par la faible dispersibilité du gel d'alumine obtenu, ce qui permet d'améliorer la productivité du procédé selon l'invention ainsi que de permettre une extrapolation du procédé au niveau industriel.

Ladite étape de filtration est avantageusement suivie d'au moins une étape de lavage, de préférence à l'eau et de préférence d'une à trois étapes de lavage, avec une quantité d'eau égale à la quantité de précipité filtré.

L'enchaînement des étapes de première précipitation a), de chauffage b) et de deuxième précipitation c) et de l'étape de filtration d), permet l'obtention d'un gel d'alumine spécifique présentant un taux de dispersibilité inférieur à 15%, de préférence compris entre 5 et 15% et de manière préférée comprise entre 6 et 14% et de manière très préférée compris entre 7 et 13%, et de manière encore plus préférée compris entre 7 et 10% et une taille de cristallite comprise entre 1 et 35 nm et de préférence comprise entre 2 à 35 nm.

Le gel d'alumine obtenu présente également avantageusement une teneur en soufre mesurée par la méthode de fluorescence X, comprise entre 0.001 et 2% poids et de préférence comprise entre 0,01 et 0,2 % poids et une teneur en sodium, mesurée par ICP-MS ou spectrométrie à plasma à couplage inductif comprise entre 0,001 et 2 % poids, et de préférence comprise entre 0,01 et 0,1 % poids, les pourcentages poids étant exprimés par rapport à la masse totale de gel d'alumine.

En particulier, le gel d'alumine ou la boehmite sous forme de poudre selon l'invention est composée de cristallites dont la taille, obtenue par la formule de Scherrer en diffraction des rayons X est respectivement comprise entre 2 et 20 nm et entre 2 et 35 nm selon les directions cristallographiques [020] et [120].

De préférence, le gel d'alumine selon l'invention présente une taille de cristallites selon la direction cristallographique [020] comprise entre 1 à 15 nm et une taille de cristallite selon la direction cristallographique [120] comprise entre 1 à 35 nm.

La diffraction des rayons X sur les gels d'alumine ou boehmites a été effectuée en utilisant la méthode classique des poudres au moyen d'un diffractomètre.

La formule de Scherrer est une formule utilisée en diffraction des rayons X sur des poudres ou échantillons polycristallins qui relie la largeur à mi-hauteur des pics de diffraction à la taille des cristallites. Elle est décrite en détail dans la référence : Appl. Cryst. (1978). 11, 102-113 "Scherrer after sixty years: A survey and some new results in the détermination of crystallite size", J. I. Langford and A. J. C. Wilson.

Le taux de dispersibilité faible du gel ainsi préparé permet de faciliter l'étape de mise en forme dudit gel selon toutes les méthodes connues de l'homme du métier et en particulier par malaxage extrusion, par granulation et par la technique dite de l'oil drop (égouttage) selon la terminologie anglo-saxonne.

### Étape e) : séchage

Conformément à l'invention, le gel d'alumine obtenu à l'issue de l'étape c) de deuxième précipitation, suivie d'une étape de filtration d), est séché dans une étape d) de séchage pour obtenir une poudre, ladite étape de séchage étant mise en œuvre par exemple par séchage, à une température comprise entre 20 et 200°C et pendant une durée comprise entre 8 h et 15h, ou par atomisation ou par toute autre technique de séchage connue de l'homme du métier.

Dans le cas où ladite étape e) de séchage est mise en œuvre par atomisation, le gâteau obtenu à l'issue de l'étape de deuxième précipitation, suivie d'une étape de filtration, est remis en suspension. Ladite suspension est ensuite pulvérisée en fines gouttelettes, dans une enceinte cylindrique verticale au contact d'un courant d'air chaud afin d'évaporer l'eau selon le principe bien connu de l'homme du métier. La poudre obtenue est entrainée par le flux de chaleur jusqu'à un cyclone ou un filtre à manche qui vont séparer l'air de la poudre.

De préférence, dans le cas où ladite étape e) de séchage est mise en œuvre par atomisation, l'atomisation est réalisée selon le protocole opératoire décrit dans la publication Asep Bayu Dani Nandiyanto, Kikuo Okuyama, Advanced Powder Technology, 22, 1-19, 2011.

### Étape f) : mise en forme

Conformément à l'invention, la poudre obtenue à l'issue de l'étape e) de séchage est mise en forme dans une étape f) pour obtenir un matériau cru.

On entend par matériau cru, le matériau mis en forme et n'ayant pas subi d'étapes de traitement thermique.

De préférence, ladite étape f) de mise en forme est réalisée par malaxage extrusion, par granulation, par la technique de l'oil-drop (ou égouttage en français), par pastillage.

De manière très préférée, ladite étape f) de mise en forme est réalisée par malaxage-extrusion.

### Étape g) : traitement thermique

Conformément à l'invention, le matériau cru obtenu à l'issue de l'étape f) de mise en forme subit ensuite une étape g) de traitement thermique à une température comprise entre 500 et 1000°C, en présence ou non d'un flux d'air contenant jusqu'à 60% volume d'eau.

De préférence, ladite étape g) de traitement thermique opère à une température comprise entre 540°C et 900°C.

De préférence, ladite étape g) de traitement thermique opère pendant une durée comprise entre 2h et 10h.

Ladite étape g) de traitement thermique permet la transition de la boehmite vers l'alumine finale.

L'étape de traitement thermique peut être précédée d'un séchage à une température comprise entre 50°C et 200°C, selon toute technique connue de l'homme du métier.

## Caractéristiques de l'oxyde poreux aluminiaue amorphe obtenu

Le procédé de préparation selon l'invention permet l'obtention d'un oxyde poreux aluminique amorphe présentant un diamètre médian poreux élevé, déterminé sur la courbe de distribution poreuse en volume par intrusion au porosimètre à mercure, avantageusement supérieur ou égal à 16 nm, de préférence supérieur ou égal à 18 nm, de manière très préférée supérieur ou égal à 20 nm, de manière encore plus préférée compris entre 21 et 23 nm, bornes incluses.

Le support oxyde aluminique mésoporeux préparé selon le procédé de l'invention est avantageusement dépourvu de micropores. L'absence de micropores est vérifiée par porosimétrie azote.

Le support oxyde aluminique mésoporeux présente avantageusement un volume mésoporeux, c'est-à-dire contenu dans les pores de diamètre compris entre 2 et 50 nm, tel que mesuré par intrusion au porosimètre à mercure, supérieur ou égal à 0,5 ml/g, de préférence supérieur ou égal à 0,7 ml/g.

Le volume poreux total mesuré par porosimétrie au mercure est avantageusement supérieur à 0.75 ml/g.

Le support oxyde aluminique mésoporeux comprend généralement une proportion de macropores, définis comme les pores de diamètre supérieur à 50 nm, inférieure à 10%, de préférence inférieure à 5% du volume poreux total déterminé par porosimétrie mercure.

Le support oxyde aluminique mésoporeux présente généralement une surface spécifique supérieure à 100 $m^2$/g.

Le support du catalyseur comprend pour sa majeure partie (au moins 90% poids) un oxyde aluminique tel que décrit ci-dessus et peut également contenir des dopants comme les éléments silicium, titane et zirconium (jusqu'à une teneur de 10 % poids).

Le support du catalyseur décrit ci-dessus est habituellement utilisé sous forme de poudre, de billes, de pastilles, de granulés ou d'extrudés, les opérations de mises en forme étant réalisées selon les techniques classiques connues de l'Homme du métier.

Le support du catalyseur majoritairement constitué de l'oxyde aluminique décrit ci-dessus peut subir une étape complémentaire de traitement thermique ou hydrothermique. On entend par traitement thermique ou hydrothermique le traitement dudit support en température respectivement sans présence ou avec présence d'eau. Dans ce dernier cas, le contact avec la vapeur d'eau peut se dérouler à pression atmosphérique (« steaming ») ou en pression autogène (autoclavage). Plusieurs cycles combinés de traitements thermiques ou hydrothermiques peuvent être réalisés. La température desdits traitements est comprise entre 200 et 1000°C, de préférence entre 450 et 1000°C et de manière encore plus préférée entre 600 et 850°C.

En cas de traitement hydrothermique, la teneur en eau est de préférence comprise entre 150 et 900 grammes par kilogramme d'air sec, et de manière encore plus préférée, entre 250 et 650 grammes par kilogramme d'air sec.

## Préparation du catalyseur

Le catalyseur est obtenu par dépôt du molybdène, éventuellement d'au moins un métal du groupe VIII de la classification périodique des élément choisi parmi le cobalt et/ou le nickel, et éventuellement d'autres éléments comme l'élément phosphore sur le support du catalyseur décrit ci-dessus.

Ledit dépôt peut être réalisé selon toutes les méthodes connues de l'Homme du métier.

En particulier, ledit dépôt sur l'alumine précédemment décrite peut être réalisé par l'ensemble des méthodes d'imprégnation connues de l'Homme du métier, dont l'imprégnation à sec. De façon préférée, le molybdène, éventuellement au moins un métal du groupe VIII de la classification périodique des élément choisi parmi le cobalt et/ou le nickel, et éventuellement l'élément phosphore sont déposés par imprégnation à sec de leurs composés associés sur le support oxyde. Le dépôt peut se faire via une seule étape d'imprégnation à sec du support oxyde via l'emploi d'une solution contenant simultanément au moins un composé du molybdène, éventuellement au moins un composé phosphoré, et éventuellement au moins un composé d'au moins un métal du groupe VIII de la classification périodique des élément choisi parmi le cobalt et/ou le nickel.

Le dépôt peut aussi être avantageusement réalisé via au moins deux cycles d'imprégnation à sec. Les différents éléments peuvent ainsi être avantageusement imprégnés successivement ou bien un des éléments peut aussi être imprégné en plusieurs séquences. Une des imprégnations qui est réalisée peut notamment servir à l'utilisation d'un composé organique que l'Homme du métier souhaite introduire en plus des éléments constitutifs du catalyseur final.

La(les)dite(s) solution(s) peu(ven)t être aqueuse(s), constituée(s) d'un solvant organique ou bien d'un mélange d'eau et d'au moins un solvant organique (par exemple l'éthanol ou le toluène). De préférence, la solution est aquo-organique et de manière encore plus préférée aquo-alcoolique. Le pH de cette solution peut être modifié par l'ajout éventuel d'un acide.

Parmi les composés qui peuvent être introduits dans la solution en tant que sources d'éléments du groupe VIII, figurent avantageusement : les citrates, oxalates, carbonates, hydroxycarbonates, hydroxydes, phosphates, sulfates, aluminates, molybdates, tungstates, oxydes, nitrates, halogénures, par exemple, chlorures, fluorures, bromures, acétates, ou tout mélange des composés énoncés ici.

Concernant les sources de l'élément du molybdène qui sont bien connues de l'Homme du métier, figurent avantageusement par exemple : les oxydes, hydroxydes, acides molybdiques et tungstiques et leurs sels, en particulier les sels d'ammonium, heptamolybdate d'ammonium, l'acide phosphomolybdique, l'acide phosphotungstique et leurs sels. On utilise de préférence les oxydes ou les sels d'ammonium tels que le molybdate d'ammonium et l'heptamolybdate d'ammonium.

La source de phosphore préférée est l'acide orthophosphorique, mais ses sels et esters comme les phosphates alcalins, phosphate d'ammonium, phosphate de gallium ou phosphates d'alkyles conviennent également. Les acides phosphoreux, par exemple l'acide hypophosphoreux, l'acide phosphomolybdique et ses sels, l'acide phosphotungstique et ses sels peuvent être avantageusement employés.

Un agent chélatant de nature organique peut avantageusement être introduit dans la solution si l'Homme du métier le juge nécessaire.

De manière préférée, la totalité de la phase métallique est introduite à la fin de la préparation du support et aucune étape supplémentaire n'est donc nécessaire.

De préférence on choisit d'imprégner en une fois le molybdène, éventuellement au moins un métal du groupe VIII de la classification périodique des élément choisi parmi le cobalt et/ou le nickel, et éventuellement l'élément phosphore sur le support oxyde aluminique préalablement obtenu, selon n'importe laquelle des méthodes d'imprégnation précédemment décrite.

Le produit est alors généralement mûri, séché et optionnellement calciné sous atmosphère oxydante, par exemple sous air, habituellement à une température d'environ 300 à 600°C, de préférence 350 à 550°C.

Dans un mode de réalisation, le catalyseur subit une étape complémentaire de traitement thermique (calcination).

De préférence, ce traitement est généralement réalisé en deux temps. Dans un premier temps, on sèche le solide à une température inférieure à 200°C sous air, de préférence inférieure à 150°C. Dans un second temps, on réalise une calcination sous air, sans ajout supplémentaire d'eau, à une température de préférence comprise entre 300 et 600°C, et de manière très préférée, comprise entre 400 et 500°C.

Dans un autre mode de réalisation, le catalyseur ne subit pas d'étape complémentaire de traitement thermique ou hydrothermique, et le catalyseur est seulement avantageusement séché. Dans ce cas, la température de séchage est inférieure à 200°C.

Le catalyseur selon la présente invention est avantageusement utilisé sous forme totalement ou partiellement sulfurée. Il subit donc avant utilisation une étape d'activation sous atmosphère sulfo-réductrice selon toute méthode connue de l'Homme du métier, de manière in situ ou ex situ.

Le traitement de sulfuration peut être effectué ex situ (avant l'introduction du catalyseur dans le réacteur d'hydrotraitement/hydroconversion) ou in situ au moyen d'un agent organosoufré précurseur d'H2S, par exemple le DMDS (diméthyldisulfure),

## Procédé d'utilisation du catalyseur

Le catalyseur préparé par le procédé selon l'invention peut être utilisé dans un procédé d'hydrotraitement de charges lourdes telles que les résidus pétroliers (atmosphériques ou sous vide).

L'utilisation concerne avantageusement des charges comprenant une teneur en métaux, nickel et vanadium, inférieure à 50 ppm, quels que soient le procédé d'utilisation et la cible de performances affichée. Cette charge peut provenir d'une étape de prétraitement réalisée sur un catalyseur quelconque.

Les procédés mettent avantageusement en œuvre le catalyseur décrit dans des procédés d'hydrotraitement permettant de convertir des charges hydrocarbonées lourdes contenant des impuretés soufrées et des impuretés métalliques.

De manière générale, les procédés d'hydrotraitement permettant de convertir des charges hydrocarbonées lourdes, contenant des impuretés soufrées et des impuretés métalliques, opèrent à une température comprise entre 320 et 450°C, sous une pression partielle d'hydrogène comprise entre 3 MPa et 30 MPa, à une vitesse spatiale avantageusement comprise entre 0,05 et 10 volumes de charge par volume de catalyseur et par heure, et avec un rapport hydrogène gazeux sur charge liquide d'hydrocarbures avantageusement compris entre 100 et 5000 normaux mètres cubes par mètres cubes.

Un objectif recherché par l'utilisation des catalyseurs préparé par le procédé selon l'invention concerne une amélioration des performances en particulier en hydrodémétallation par rapport aux catalyseurs connus de l'art antérieur. Le catalyseur décrit permet une amélioration en hydrodémétallation et en hydrodésasphaltage par rapport aux catalyseurs conventionnels, tout en présentant une grande stabilité dans le temps.

**Charges**

Les charges traitées dans le procédé d'hydrotraitement sont avantageusement choisies parmi les résidus atmosphériques, les résidus sous vide issus de la distillation directe, les huiles désasphaltées, les résidus issus des procédés de conversion tels que par exemple ceux provenant du coking, d'une hydroconversion en lit fixe, en lit bouillonnant, ou encore en lit mobile, pris seuls ou en mélange. Ces charges peuvent avantageusement être utilisées telles quelles ou encore diluées par une fraction hydrocarbonée ou un mélange de fractions hydrocarbonées pouvant être choisies parmi les produits issus du procédé FCC, une huile de coupe légère (LCO selon les initiales de la dénomination anglo-saxonne de Light Cycle Oil), une huile de coupe lourde (HCO selon les initiales de la dénomination anglo-saxonne de Heavy Cycle Oil), une huile décantée (DO selon les initiales de la dénomination anglo-saxonne de Decanted Oil), un slurry, ou pouvant venir de la distillation, les fractions gazoles notamment celles obtenues par distillation sous vide dénommées selon la terminologie anglo-saxonne VGO (Vacuum Gas Oil). Les charges lourdes peuvent ainsi avantageusement comprendre des coupes issues du procédé de liquéfaction du charbon, des extraits aromatiques, ou toute autre coupe hydrocarbonée.

Le procédé d'hydrotraitement s'adresse avantageusement aux charges hydrocarbonées présentant moins de 50 ppm de métaux, nickel et vanadium par exemple.

Lesdites charges lourdes présentent généralement plus de 1% en poids de molécules ayant un point d'ébullition supérieur à 500°C, une teneur en métaux (Ni+V) supérieure à 1 ppm poids, de préférence supérieure à 20 ppm poids, de manière très préférée comprise entre 30 et 50 ppm poids, une teneur en asphaltènes, précipités dans l'heptane, supérieure à 0,05% en poids, de préférence supérieure à 1% en poids, de manière très préférée supérieure à 2%.

Les charges lourdes peuvent avantageusement aussi être mélangées avec du charbon sous forme de poudre, ce mélange étant généralement appelé slurry. Ces charges peuvent avantageusement être des sous produits issus de la conversion du charbon et re-mélangés à du charbon frais. La teneur en charbon dans la charge lourde est généralement et de préférence un ratio ¼ (Oil/Coal) et peut avantageusement varier largement entre 0,1 et 1. Le charbon peut contenir de la lignite, être un charbon sub-bitumineux (selon la terminologie anglo-saxonne), ou encore bitumineux. Tout autre type de charbon convient pour l'utilisation à la fois dans des réacteurs à lit fixe ou dans des réacteurs fonctionnant en lit bouillonnant.

Le catalyseur précédemment décrit est préférentiellement utilisé dans les premiers lits catalytiques d'un procédé comprenant successivement au moins une étape d'hydrodémétallation et au moins une étape d'hydrodésulfuration. Le procédé d'hydrotraitement est avantageusement mis en œuvre dans un à dix réacteurs successifs, le ou les catalyseur(s) pouvant avantageusement être chargés dans un ou plusieurs réacteurs et/ou dans tout ou partie des réacteurs.

Dans le cas où le procédé met en œuvre une charge hydrocarbonée plus concentrée en métaux, c'est-à-dire ayant une teneur cumulée en métaux (Ni+V) supérieure à 50 ppm, le catalyseur peut être placé en aval d'un ou plusieurs catalyseurs d'hydrodémétallation pouvant être l'un quelconque des catalyseurs décrits dans l'art antérieur, et connus de l'Homme du métier. Ce ou ces catalyseur(s) permettent alors de disposer d'une charge partiellement hydrotraitée qui contient moins de 50 ppm de métaux (Ni+V) à l'entrée du lit catalytique composé du catalyseur.

Le procédé d'hydrotraitement peut avantageusement être mis en œuvre en lit fixe avec pour objectif l'élimination des métaux et du soufre et d'abaisser le point d'ébullition moyen des hydrocarbures. Dans le cas où le procédé d'hydrotraitement est mis en œuvre en lit fixe, la température de mise en œuvre est avantageusement comprise entre 320°C et 450°C, de préférence 350°C à 410°C, sous une pression partielle en hydrogène avantageusement comprise entre 3 MPa et 30 MPa, de préférence entre 10 et 20 MPa, à une vitesse spatiale avantageusement comprise entre 0,05 et 5 volumes de charge par volume de catalyseur et par heure, et avec un rapport hydrogène gazeux sur charge liquide d'hydrocarbures avantageusement compris entre 200 et 5000 normaux mètres cubes par mètres cubes, de préférence 500 à 1500 normaux mètres cubes par mètres cubes.

Le procédé d'hydrotraitement peut aussi avantageusement être mis en œuvre pour partie en lit bouillonnant sur les mêmes charges. Dans le cas où le procédé selon l'invention est mis en œuvre en lit bouillonnant, le catalyseur est avantageusement mis en œuvre à une température comprise entre 320 et 450°C, sous une pression partielle d'hydrogène avantageusement comprise entre 3 MPa et 30 MPa, de préférence entre 10 et 20 MPa, à une vitesse spatiale avantageusement comprise entre 0,1 et 10 volumes de charge par volume de catalyseur et par heure, de préférence entre 0,5 et 2 volumes de charge par volume de catalyseur et par heure, et avec un rapport hydrogène gazeux sur charge liquide d'hydrocarbures avantageusement compris entre 100 et 3000 normaux mètres cubes par mètres cubes, de préférence entre 200 à 1200 normaux mètres cubes par mètres cubes.

Selon un mode de réalisation préféré, le procédé selon l'invention est mis en œuvre en lit fixe.

Avant leur mise en œuvre dans le procédé d'hydrotraitement, les catalyseurs sont de préférence soumis à un traitement de sulfuration permettant de transformer, au moins en partie, les espèces métalliques en sulfure avant leur mise en contact avec la charge à traiter. Ce traitement d'activation par sulfuration est bien connu de l'Homme du métier et peut être effectué par toute méthode déjà connue déjà décrite dans la littérature. Une méthode de sulfuration classique bien connue de l'Homme du métier consiste à chauffer le mélange de solides sous flux d'un mélange hydrogène et hydrogène sulfuré ou sous flux d'un mélange d'hydrogène et d'hydrocarbures contenant des molécules soufrées à une température comprise entre 150 et 800°C, de préférence entre 250 et 600°C, généralement dans une zone réactionnelle à lit traversé.

Le traitement de sulfuration peut être effectué ex situ (avant l'introduction du catalyseur dans le réacteur d'hydrotraitement/hydroconversion) ou in situ au moyen d'un agent organosoufré précurseur d'$H_2S$, par exemple le DMDS (diméthyldisulfure).

Les exemples suivants illustrent l'invention sans toutefois en limiter la portée.

## EXEMPLES

### Exemple 1 : Préparation des supports de catalyseurs A et B (conformes)

On réalise la synthèse d'une alumine selon l'invention sur un poste classique avec un réacteur en 5L en 3 étapes.

La concentration des précurseurs est la suivante : sulfate d'aluminium $Al_2(SO_4)_3$ à 102g/L en $Al_2O_3$ et aluminate de sodium NaAlOO à 155g/L en $Al_2O_3$.

L'alumine selon l'invention est fabriquée selon les étapes suivantes :

a) Une première co-précipitation du sulfate d'aluminium $Al_2(SO_4)_3$ et de l'aluminate de sodium NaAlOO à 30°C et pH=9,1 en 8 min : le taux d'avancement est de 8%. Le taux d'avancement correspond à la proportion d'alumine formée lors de la première étape, soit une concentration finale en alumine à 45g/l. Si on travaille dans un réacteur de 5 l et que l'on vise 4 l de suspension d'alumine de concentration finale en $Al_2O_3$ de 45 g/l, avec un taux d'avancement ciblé de 8 % pour la première étape de précipitation, 8 % de l'alumine totale doit être apportée lors de l'étape a) de précipitation. Le pH de précipitation de la première étape est fixé à 9,1. La quantité d'eau présente initialement dans le réacteur est 1330 ml . Pour la première étape a) de précipitation opérant à 30°C et pendant 8 minutes, le débit de sulfate d'aluminium doit être de 6,1 ml/min, le débit d'aluminate de sodium est de 7,6 ml/min et le débit d'eau de 69,7 mL/min. Le ratio massique d'aluminate de sodium sur sulfate d'aluminium est donc de 1,91.

b) Une montée en température de 30 à 70°C en 20 à 30 min ;

c) Une deuxième co-précipitation du sulfate d'aluminium $Al_2(SO_4)_3$ et de l'aluminate de sodium NaAlOO à 70°C et pH=9,1 en 30 min, avec un taux d'avancement de 92% ; Pour la deuxième étape de précipitation, opérant à 70°C, pendant 30 minutes, le pH de précipitation de la deuxième étape est fixé à 9,1, le débit de sulfate d'aluminium doit être de 19 ml/min, le débit d'aluminate de sodium est de 23 ml/min et le débit d'eau de 24,7 mL/min. Le ratio massique d'aluminate de sodium sur sulfate d'aluminium est donc de 1,84.

d) Filtration par déplacement sur un outil type Buchner fritté P4 et lavage 3 fois avec 5L d'eau distillée à 70°C.

e) Séchage une nuit à 120°C.

f) Mise en forme du matériau cru :

Le gel d'alumine séché est introduit dans un malaxeur de type Brabender. De l'eau acidifiée avec de l'acide nitrique à un taux d'acide total de 3 %, exprimé en poids par rapport à la masse de gel séché introduit dans le malaxeur, est ajoutée en 10 minutes, pendant un malaxage à 20 tours/min. Le malaxage acide est poursuivi pendant 5 minutes. Une étape de neutralisation est ensuite réalisée par ajout d'une solution ammoniacale dans le malaxeur, à un taux de neutralisation de 200%, exprimé en poids d'ammoniaque par rapport à la quantité d'acide nitrique introduit dans le malaxeur pour l'étape d'acidification. Le malaxage est poursuivi pendant 3 minutes.

La pâte obtenue est ensuite extrudée à travers une filière de 2 mm trilobées.

g) Traitement thermique : Les extrudés obtenus sont séchés à 100°C pendant une nuit, puis calcinés :

- soit 2h à 800°C sous flux d'air humide en four tubulaire (VVH=1 l/h/g avec 30%v/v d'eau) : ces extrudés donnent le support A ;
- soit 2h à 700°C sous flux d'air humide en four tubulaire (VVH=1 l/h/g avec 30%v/v d'eau, ce qui conduit aux extrudés du support B.

La distribution poreuse de l'alumine obtenue est caractérisée par intrusion au porosimètre à mercure selon la norme ASTM D4284-83 à une pression maximale de 4000 bar (400 MPa), utilisant une tension de surface de 484 dyne/cm et un angle de contact de 140°.

L'absence de microporosité est vérifiée par porosimétrie azote.

Tableau 1 : Supports synthétisés

|  | A | B | C | D |
|---|---|---|---|---|
| Volume poreux total (ml/g) | 0,78 | 0,74 | 0,87 | 1,02 |
| Volume mésoporeux (ml/g) | 0,75 | 0,71 | 0,87 | 0,81 |
| Volume macroporeux (ml/g) | 0,03 | 0,03 | 0,00 | 0,21 |
| %Vmacro | 4% | 4% | 0% | 21% |
| Dp méso (nm) | 20,4 | 17,6 | 15,4 | 28,4 |
| $S_{BET}$ ($m^2$/g) | 128 | 146 | 184 | 179 |

**Exemple 2: Préparation d'un support de catalyseur C (non conforme)**

On réalise dans un premier temps la synthèse d'un gel d'alumine nonconforme en ce que l'exemple 2 est réalisé selon le procédé de préparation décrit dans le brevet US 7 790 562.

La synthèse est réalisée dans un réacteur de 7L et une suspension finale de 5L en 2 étapes de précipitation. La quantité d'eau ajoutée dans le réacteur est de 3960 ml.

La concentration finale en alumine visée est de 30 g/L.

Une première étape de co-précipitation de sulfate d'aluminium $Al_2(SO_4)$ et d'aluminate de sodium NaAlOO est réalisée à 30°C et pH=9,3 pendant une durée de 8 minutes. Les concentrations des précurseurs d'aluminium utilisées sont les suivantes : $Al_2(SO_4)$= à 102g/L en $Al_2O_3$ et NaAlOO à 155g/L en $Al_2O_3$. L'agitation est de 350 rpm tout au long de la synthèse.

Une solution de sulfate d'aluminium $Al_2(SO_4)$ est ajoutée en continu pendant 8 minutes à un débit de 19,6 ml/min à une solution d'aluminate de sodium NaAlOO selon un ratio massique base/acide = 1,80 de manière à ajuster le pH à une valeur de 9,3. La température du milieu réactionnel est maintenu à 30°C.

Une suspension contenant un précipité d'alumine est obtenue.

La concentration finale en alumine visée étant de 30g/L, le débit des précurseurs sulfate d'aluminium $Al_2(SO_4)$ et aluminate de sodium NaAlOO contenant de l'aluminium introduit dans la première étape de précipitations sont respectivement de 19,6 ml/min et de 23,3 ml/min.

Ces débits de précurseurs acide et basique contenant de l'aluminium permettent d'obtenir à l'issue de la première étape de précipitation un taux d'avancement de 30%.

La suspension obtenue est ensuite soumise à une montée en température de 30 à 57°C.

Une deuxième étape de co-précipitation de la suspension obtenue est ensuite réalisé par ajout de sulfate d'aluminium $Al_2(SO_4)$ à une concentration de 102 g/L en $Al_2O_3$ et d'aluminate de sodium NaAlOO à une concentration de 155 g/L en $Al_2O_3$. Une solution de sulfate d'aluminium $Al_2(SO_4)$ est donc ajoutée en continu à la suspension chauffée obtenue à l'issue de la première étape de précipitation pendant 30 minutes à un débit de 12,8 ml/min à une solution d'aluminate de sodium NaAlOO selon un ratio massique base/acide = 1,68 de manière à ajuster le pH à une valeur de 8,7. La température du milieu réactionnel dans la deuxième étape est maintenu à 57°C.

Une suspension contenant un précipité d'alumine est obtenue.

La concentration finale en alumine visée étant de 30g/L, le débit des précurseurs sulfate d'aluminium $Al_2(SO_4)$ et aluminate de sodium NaAlOO contenant de l'aluminium introduit dans la deuxième étape de précipitations sont respectivement de 12,8 ml/min et 14,1 ml/min. Ces débits de précurseurs acide et basique contenant de l'aluminium permettent d'obtenir à l'issue de la deuxième étape de précipitation un taux d'avancement de 70%.

La suspension obtenue est ensuite filtrée par déplacement d'eau sur un outil type Buchner fritté et le gel d'alumine obtenu est lavé 3 fois avec 5 L d'eau distillée à 70°C.

**Mise en forme du matériau cru :**

Le gel d'alumine séché est introduit dans un malaxeur de type Brabender. De l'eau acidifiée avec de l'acide nitrique à un taux d'acide total de 3 %, exprimé en poids par rapport à la masse de gel séché introduit dans le malaxeur, est ajoutée en 10 minutes, pendant un malaxage à 20 tours/min. Le malaxage acide est poursuivi pendant 5 minutes. Une étape de neutralisation est ensuite réalisée par ajout d'une solution ammoniacale dans le malaxeur, à un taux de neutralisation de 80%, exprimé en poids d'ammoniaque par rapport à la quantité d'acide nitrique introduit dans le malaxeur pour l'étape d'acidification. Le malaxage est poursuivi pendant 3 minutes.

La pâte obtenue est ensuite extrudée à travers une filière de 2 mm trilobées. Les extrudés obtenus sont séchés à 100°C pendant une nuit, puis calcinés pendant 2 h à 600°C.

g) Traitement thermique : Les extrudés obtenus sont séchés à 100°C pendant une nuit, puis calcinés 2h à 800°C sous flux d'air humide en four tubulaire (VVH=1 l/h/g avec 30%v/v d'eau).

La distribution poreuse de l'alumine obtenue est caractérisée par intrusion au porosimètre à mercure selon la norme ASTM D4284-83 à une pression maximale de 4000 bar, utilisant une tension de surface de 484 dyne/cm et un angle de contact de 140° .

L'absence de microporosité est vérifiée par porosimétrie azote.

## Exemple 3: Préparation d'un support de catalyseur D, selon l'exemple B du brevet EP1392431 (non conforme)

La synthèse de ce support est effectuée selon le protocole décrit dans le brevet EP 1 392431. Dans un réacteur, sont simultanément ajoutés le sulfate d'aluminium et l'aluminate de sodium afin d'atteindre un pH de 8,5 et le tout est chauffé à 80°C pendant 70 minutes. La suspension obtenue est filtrée et lavée à l'eau chaude afin d'éliminer les impuretés. La pâte est ensuite malaxée pendant 20 minutes puis extrudée à travers une filière cylindrique de 0,9 mm de diamètre. Les extrudés obtenus sont séchés à 120°C pendant 16 h, puis calcinés 2h à 800°C.

## Exemple 4 : Préparation des catalyseurs A1, B1 (conformes), C1, et D1 (comparatifs)

Les supports A, B, C et D, ont été imprégnés à sec à partir d'une solution mère N°1 préparée par dissolution dans l'eau d'oxyde de molybdène, d'hydroxyde de nickel et d'acide phosphorique achetés chez Sigma Aldrich®, afin de préparer respectivement les catalyseurs A1, B1, C1, D1. La solution mère présente la concentration molaire suivante : 1,8 mol/l en phosphore, 3,4 mol/l de molybdène et 1,3 mol/l en nickel. Celle-ci est diluée de telle sorte que les différents catalyseurs issus de l'imprégnation à sec des supports présentent les mêmes teneurs visées en métaux, soit 10 %poids en trioxyde de molybdène, 1,95 %poids en oxyde de nickel et 2,60 %poids en pentaoxyde de phosphore ce qui correspond aux rapports molaires suivants : Ni/Mo=0,38 et P/Mo=0,53. Les teneurs finales des catalyseurs ainsi préparés sont résumées dans le tableau ci-après.

Tableau 2 : Catalyseurs synthétisés

|  | A1 | B1 | C1 | D1 |
|---|---|---|---|---|
|  | selon l'invention | | comparatif | |
| %NiO (pds) | 1,87 | 1,92 | 1,98 | 1,92 |
| %MoO$_3$ (pds) | 10,02 | 10,17 | 10,20 | 10,07 |
| %P$_2$O$_5$ (pds) | 2,64 | 2,57 | 2,53 | 2,61 |

## Exemple 5 : Évaluation en hydrotraitement (HDT) de résidus des catalyseurs A1, B1 en comparaison avec les catalyseurs C1, D1

Les catalyseurs A1 et B1 préparés selon l'invention, mais aussi les catalyseurs comparatifs C1 et D1 ont été soumis à un test catalytique en réacteur batch parfaitement agité, sur une charge de type RSV Arabian Light (voir caractéristiques dans le Tableau 3).

Tableau 3 : Caractéristiques de la charge RSV Arabian Light utilisée

|  |  | RSV Arabian Light |
|---|---|---|
| Densité 15/4 |  | 0,9712 |
| Viscosité à 100°C | mm2/s | 45 |
| Soufre | % pds | 3,38 |
| Azote | ppm | 2257 |
| Nickel | ppm | 10,6 |
| Vanadium | ppm | 41,0 |
| Carbone aromatique | % | 24,8 |
| Carbone conradson | % pds | 10,2 |

(suite)

|  |  |  | RSV Arabian Light |
|---|---|---|---|
| Asphaltènes C7 | % pds | | 3,2 |
| SARA | | | |
| Saturés | % pds | | 28,1 |
| Aromatiques | % pds | | 46,9 |
| Résines | % pds | | 20,1 |
| Asphaltènes | % pds | | 3,5 |
| Distillation simulée | | | |
| PI | °C | | 219 |
| 5% | °C | | 299 |
| 10% | °C | | 342 |
| 20% | °C | | 409 |
| 30% | °C | | 463 |
| 40% | °C | | 520 |
| 50% | | | 576 |
| DS : PF °C | °C | | 614 |
| DS : res disti | %pds | | 57 |

Pour ce faire, après une étape de sulfuration ex-situ par circulation d'un mélange gazeux $H_2S/H_2$ durant 2 heures à 350°C, 15 ml de catalyseur est chargé à l'abri de l'air dans le réacteur batch puis est recouvert de 90 ml de charge. Les conditions opératoires appliquées sont ensuite les suivantes :

Tableau 4 : Conditions opératoires mises en œuvre en réacteur batch

| Pression totale | 9,5 MPa |
|---|---|
| Température de test | 370°C |
| Durée de l'essai | 3 heures |

A la fin de l'essai, le réacteur est refroidi et après un triple strippage de l'atmosphère sous azote (10 minutes à 1 MPa), l'effluent est recueilli et analysé par fluorescence des rayons X (soufre et métaux) et par distillation simulée (ASTM D7169).

Le taux d'HDS est défini de la façon suivante :

$$HDS \ (\%) = ((\% \ pds \ S)charge\text{-}(\% \ pds \ S)recette)/(\% \ pds \ S)charge \times 100$$

De la même manière, le taux d'HDM est défini de la façon suivante :

$$HDM \ (\%) = ((ppm \ pds \ Ni\text{+}V)charge\text{-}(ppm \ pds \ Ni\text{+}V)recette)/(ppm \ pds \ Ni\text{+}V)charge \times 100$$

Les performances des catalyseurs sont résumées dans le Tableau 5.

Tableau 5 : Performances HDS et HDM des catalyseurs A1, B1 en comparaison avec les catalyseurs C1, D1

| Catalyseurs | HDS (%) | HDM (%) |
|---|---|---|
| A1 (selon l'invention) | 48,5 | 81,8 |

(suite)

| Catalyseurs | HDS (%) | HDM (%) |
|---|---|---|
| B1 (selon l'invention) | 50,8 | 83,1 |
| C1 (comparatif) | 50,2 | 70,2 |
| D1 (comparatif) | 44,1 | 74,9 |

On déduit du Tableau 5 que la mise en œuvre des catalyseurs de la présente invention engendre un gain significatif d'hydrodémétallation HDM qui n'est jamais observé pour les différentes textures de l'art antérieur. Les différences en hydrodésulfuration HDS restent par ailleurs négligeables.

**Exemple 6 : Évaluation en hydrotraitement en lit fixe des catalyseurs A1, B1 selon l'invention et comparaison avec les performances catalytiques du catalyseur C1**

Les catalyseurs A1 et B1 préparés selon l'invention ont été comparés en test d'hydrotraitement de résidus pétroliers en comparaison avec les performances du catalyseur C1. La charge est constituée d'un mélange entre un résidu atmosphérique (RA) d'origine Moyen Orient (Arabian médium) et un résidu sous vide (Arabian Light) qui a préalablement été hydrotraité par un catalyseur d'hydrodémétallation commercial. La charge se caractérise par de fortes teneurs en carbone Conradson (9,6 % en poids) et asphaltènes (2,1 % en poids) et une quantité de nickel de 21% en poids, une quantité de vanadium de 10% en poids et une quantité de soufre de 2,25 % en poids.

Les caractéristiques complètes de la charge utilisée sont reportées dans le Tableau 6.

Tableau 6 : Caractéristiques de la charge utilisée pour les essais

| | | Mix RA AM/RSV AL hydrotraité |
|---|---|---|
| Densité 15/4 | | 0,9610 |
| Soufre | % pds | 2.25 |
| Azote | ppm | 2300 |
| Nickel | ppm | 21 |
| Vanadium | ppm | 10 |
| Carbone Conradson | % pds | 9,6 |
| Asphaltènes C7 | % pds | 2,1 |
| Distillation simulée | | |
| PI | °C | 193 |
| 10% | °C | 378 |
| 25% | °C | 453 |
| 50% | °C | 549 |
| 65% | °C | 601 |
| 66% | °C | 605 |
| 67% | °C | 609 |
| 68% | °C | 614 |

Après une étape de sulfuration par circulation dans le réacteur d'une coupe gazole additionnée de DMDS à une température finale de 350°C, on opère l'unité avec le mélange de charges ci-dessus dans les conditions opératoires du Tableau 7.

Tableau 7 : Conditions opératoires mises en œuvre en réacteur en lit fixe

| Pression totale | 15 MPa |
|---|---|

(suite)

| Température de test | 370°C |
|---|---|
| Vitesse spatiale horaire du résidu | 1,2 h-1 |
| Débit d'hydrogène | 1200 std I. H2/l. charge |

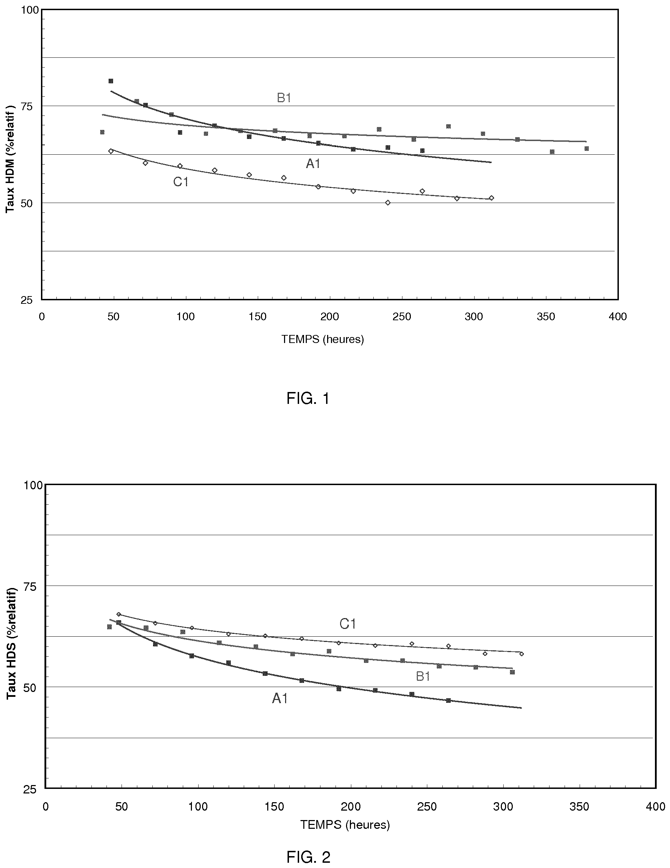

On injecte la charge, puis on monte à la température de l'essai. Après une période de stabilisation de 300 heures, les performances en hydrodésulfuration (HDS) et en hydrodémétallation (HDM) sont relevées, ainsi qu'en hydroconversion du résidu sous vide RSV (coupe 540°C+). Dans la suite, les performances sont présentées en conversions relatives par rapport à la référence (positionnée à zéro dans le tableau 8) ou sur une échelle relative où l'activité est normalisée à 100 (arbitrairement) sur les Figures 1 et 2.

On confirme les résultats de l'exemple 5, c'est-à-dire l'augmentation des performances en hydrodémétallation HDM des catalyseurs selon l'invention par rapport au catalyseur de référence C1. Le gain par rapport au catalyseur C1 atteint 2 à 3 ppm de métal en moins dans l'effluent, ce qui représente une amélioration considérable pour le raffineur. Ce gain est d'autre part accessible avec une teneur en soufre dans l'effluent qui reste assez proche de celle obtenue avec le catalyseur C1.

Tableau 8 : Performances en hydrodésulfuration HDS, hydrodémétallation HDM des catalyseurs A1, B1, et C1 à 300 heures en lit fixe

| Catalyseurs | HDS | | HDM | |
|---|---|---|---|---|
| | % converti | %S effluent | %converti | ppm métaux effluent |
| A1 (selon l'invention) | Base -13% | Base +0.29% | Base + 8% | Base - 3ppm |
| B1 (selon l'invention) | Base - 4% | Base +0.09% | Base + 12% | Base - 2 ppm |
| C1 | Base | Base | Base | Base |

## Revendications

1. Procédé de préparation d'un catalyseur d'hydroconversion comprenant :

   - un support oxyde majoritairement aluminique calciné comprenant une teneur en alumine supérieure ou égale à 90% poids et une teneur en silice d'au plus 10% poids en équivalent $SiO_2$ par rapport à l'oxyde final ;
   - une phase active hydro-déshydrogénante comprenant du molybdène, la teneur en élement molybdène, mesurée par fluorescence des rayons X, étant comprise entre 6 et 14% en poids de trioxyde de molybdène par rapport au poids total du catalyseur, éventuellement au moins un métal du groupe VIII de la classification périodique des éléments choisi parmi le nickel et/ou le cobalt, éventuellement du phosphore,

   ledit catalyseur présentant :

   - une surface spécifique Sbet supérieure à 75 $m^2$/g,
   - un volume poreux total mesuré par porosimétrie au mercure supérieur ou égal à 0,55 ml/g,
   - un diamètre médian mésoporeux en volume, mesuré par porosimétrie au mercure ,supérieur ou égal à 16 nm,
   - un volume mésoporeux tel que mesuré par intrusion au porosimètre à mercure, supérieur ou égal à 0,50 ml/g,
   - un volume macroporeux inférieur à 15 % du volume poreux total, mesuré par porosimétrie au mercure,
   - un diamètre médian macroporeux, mesuré par porosimétrie au mercure, compris entre 60 et 200 nm,
   - ledit volume mésoporeux, le volume poreux total et le volume macroporeux étant mesurés par porosité au mercure selon la norme ASTM D4284-83 ;

   ledit procédé comprenant au moins les étapes suivantes :

   a) une première étape de précipitation, en milieu réactionnel aqueux, d'au moins un précurseur basique choisi parmi l'aluminate de sodium, l'aluminate de potassium, l'ammoniaque, l'hydroxyde de sodium et l'hydroxyde de potassium et d'au moins un précurseur acide choisi parmi le sulfate d'aluminium, le chlorure d'aluminium, le nitrate d'aluminium, l'acide sulfurique, l'acide chlorhydrique et l'acide nitrique, dans lequel au moins un des précurseurs basique ou acide comprend de l'aluminium, le débit relatif des précurseurs acide et basique est choisi de manière à obtenir un pH du milieu réactionnel compris entre 8,5 et 10,5 et le débit du ou des précurseurs acide et basique contenant de l'aluminium est réglé de manière à obtenir un taux d'avancement de la première étape compris entre 5 et 13%, le taux d'avancement étant défini comme étant la proportion d'alumine formée en équivalent $Al_2O_3$ lors de ladite première étape de précipitation par rapport à la quantité totale d'alumine formée en équivalent $Al_2O_3$ à l'issue de l'étape c) du procédé de préparation, ladite étape opérant à une température comprise entre 20 et 90°C et pendant une durée comprise entre 2 minutes et 30 minutes;

b) une étape de chauffage de la suspension à une température comprise entre 40 et 90°C pendant une durée comprise entre 7 minutes et 45 minutes,

c) une deuxième étape de précipitation de la suspension obtenue à l'issue de l'étape de chauffage b) par ajout dans la suspension d'au moins un précurseur basique choisi parmi l'aluminate de sodium, l'aluminate de potassium, l'ammoniaque, l'hydroxyde de sodium et l'hydroxyde de potassium et d'au moins un précurseur acide choisi parmi le sulfate d'aluminium, le chlorure d'aluminium, le nitrate d'aluminium, l'acide sulfurique, l'acide chlorhydrique et l'acide nitrique, dans lequel au moins un des précurseurs basique ou acide comprend de l'aluminium, le débit relatif des précurseurs acide et basique est choisi de manière à obtenir un pH du milieu réactionnel compris entre 8,5 et 10,5 et le débit du ou des précurseurs acide et basique contenant de l'aluminium est réglé de manière à obtenir un taux d'avancement de la deuxième étape compris entre 87 et 95 %, le taux d'avancement étant défini comme étant la proportion d'alumine formée en équivalent $Al_2O_3$ lors de ladite deuxième étape de précipitation par rapport à la quantité totale d'alumine formée en équivalent $Al_2O_3$ à l'issue de l'étape c) du procédé de préparation, ladite étape opérant à une température comprise entre 40 et 90 °C et pendant une durée comprise entre 2 minutes et 50 minutes ;

d) une étape de filtration de la suspension obtenue à l'issue de l'étape c) de deuxième précipitation pour obtenir un gel d'alumine ;

e) une étape de séchage dudit gel d'alumine obtenu à l'étape d) pour obtenir une poudre ;

f) une étape de mise en forme de la poudre obtenue à l'issue de l'étape e) pour obtenir un matériau cru ;

g) une étape de traitement thermique du matériau cru obtenu à l'issue de l'étape f) à une température comprise entre 500 et 1000°C, en présence ou non d'un flux d'air contenant jusqu'à 60% en volume d'eau, pour obtenir un support oxyde aluminique;

h) une étape d'imprégnation de la phase active hydro-déhydrogénante sur ledit support oxyde aluminique.

2. Procédé selon la revendication 1 dans lequel le taux d'avancement de la première étape de précipitation a) est compris entre 6 et 12%.

3. Procédé selon l'une des revendications 1 ou 2 dans lequel le taux d'avancement de la première étape de précipitation a) est compris entre 7 et 1 1%.

4. Procédé selon l'une des revendications 1 à 3 dans lequel le précurseur basique est l'aluminate de sodium.

5. Procédé selon l'une des revendications 1 à 4 dans lequel le précurseur acide est le sulfate d'aluminium.

6. Procédé selon l'une des revendications 1 à 5 dans lequel dans la première étape de précipitation le milieu réactionnel aqueux est de l'eau et ladite étape opère sous agitation, en l'absence d'additif organique.

## Patentansprüche

1. Verfahren zur Herstellung eines Katalysators zur Hydrokonversion, umfassend:

- einen kalzinierten Oxidträger, der überwiegend aus Aluminium besteht, umfassend einen Aluminiumoxidgehalt von größer oder gleich 90 Gew.-% und einen Siliziumdioxidgehalt von höchstens 10 Gew.-% $SiO_2$-Äquivalent, bezogen auf das fertige Oxid;
- eine aktive Hydrier-/Dehydrierphase, umfassend Molybdän, wobei der Gehalt an dem Element Molybdän, gemessen mittels Röntgenfluoreszenzstrahlung, im Bereich zwischen 6 und 14 Gew.-% Molybdäntrioxid, bezogen auf das Gesamtgewicht des Katalysators, liegt, gegebenenfalls mindestens ein Metall der Gruppe VIII des Periodensystems der Elemente, ausgewählt aus Nickel und/oder Kobalt, gegebenenfalls Phosphor,

wobei der Katalysator aufweist:

- eine spezifische Oberfläche Sbet größer als 75 m$^2$/g,
- ein Gesamtporenvolumen, gemessen mittels Quecksilberporosimetrie, größer oder gleich 0,55 ml/g,
- einen volumenmittleren Mesoporendurchmesser, gemessen mittels Quecksilberporosimetrie, größer oder gleich 16 nm,
- ein Mesoporenvolumen, gemessen mittels Quecksilber-Intrusionsporosimetrie, größer oder gleich 0,50 ml/g,
- ein Makroporenvolumen von weniger als 15 % des Gesamtporenvolumens, gemessen mittels Quecksilberporosimetrie,
- einen mittleren Makroporendurchmesser, gemessen mittels Quecksilberporosimetrie, im Bereich zwischen 60 und 200 nm,
- wobei das Mesoporenvolumen, des Gesamtporenvolumen und das Makroporenvolumen mittels Quecksilberporosimetrie gemäß der Norm ASTM D4284-83 gemessen werden;

wobei das Verfahren mindestens die folgenden Schritte umfasst:

a) einen ersten Schritt zum Ausfällen in einem wässrigen Reaktionsmedium mindestens einer basischen Vorstufe, ausgewählt aus Natriumaluminat, Kaliumaluminat, Ammoniak, Natriumhydroxid und Kaliumhydroxid, und mindestens einer sauren Vorstufe, ausgewählt aus Aluminiumsulfat, Aluminiumchlorid, Aluminiumnitrat, Schwefelsäure, Salzsäure und Salpetersäure, wobei mindestens eine der basischen oder sauren Vorstufen Aluminium umfasst, wobei der relative Durchfluss der sauren und basischen Vorstufen so ausgewählt ist, dass ein pH-Wert des Reaktionsmediums im Bereich zwischen 8,5 und 10,5 erhalten wird, und der Durchfluss der sauren und basischen Vorstufe(n), die Aluminium enthalten, so reguliert ist, dass ein Fortschrittsgrad des ersten Schritts im Bereich zwischen 5 und 13 % erhalten wird, wobei der Fortschrittsgrad als der Anteil an Aluminiumoxid, gebildet als Al$_2$O$_3$-Äquivalent während des ersten Schritts zum Ausfällen, bezogen auf die Gesamtmenge an Aluminiumoxid, gebildet als Al$_2$O$_3$-Äquivalent am Ende von Schritt c) des Herstellungsverfahrens, definiert ist, wobei der Schritt bei einer Temperatur im Bereich zwischen 20 und 90 °C und für eine Dauer im Bereich zwischen 2 Minuten und 30 Minuten durchgeführt wird;
b) einen Schritt zum Erwärmen der Suspension auf eine Temperatur im Bereich zwischen 40 und 90 °C für eine Dauer im Bereich zwischen 7 Minuten und 45 Minuten,
c) einen zweiten Schritt zum Ausfällen der Suspension, die am Ende des Schritts zum Erwärmen b) erhalten wird, durch Zugeben zu der Suspension mindestens einer basischen Vorstufe, ausgewählt aus Natriumaluminat, Kaliumaluminat, Ammoniak, Natriumhydroxid und Kaliumhydroxid, und mindestens einer sauren Vorstufe, ausgewählt aus Aluminiumsulfat, Aluminiumchlorid, Aluminiumnitrat, Schwefelsäure, Salzsäure und Salpetersäure, wobei mindestens eine der basischen oder sauren Vorstufen Aluminium umfasst, wobei der relative Durchfluss der sauren und basischen Vorstufen so ausgewählt ist, dass ein pH-Wert des Reaktionsmediums im Bereich zwischen 8,5 und 10,5 erhalten wird, und der Durchfluss der sauren und basischen Vorstufe(n), die Aluminium enthalten, so reguliert ist, dass ein Fortschrittsgrad des zweiten Schritts im Bereich zwischen 87 und 95 % erhalten wird, wobei der Fortschrittsgrad als der Anteil an Aluminiumoxid, gebildet als Al$_2$O$_3$-Äquivalent während des zweiten Fällungsschritts, bezogen auf die Gesamtmenge an Aluminiumoxid, gebildet als Al$_2$O$_3$-Äquivalent am Ende von Schritt c) des Herstellungsverfahrens, definiert ist, wobei der Schritt bei einer Temperatur im Bereich zwischen 40 und 90 °C und für eine Dauer im Bereich zwischen 2 Minuten und 50 Minuten durchgeführt wird;
d) einen Schritt zum Filtrieren der Suspension, die am Ende von Schritt c) zur zweiten Ausfällung erhalten wird, um ein Aluminiumoxidgel zu erhalten;
e) einen Schritt zum Trocknen des Aluminiumoxidgels, das in Schritt d) erhalten wird, um ein Pulver zu erhalten;
f) einen Schritt zum Formen des Pulvers, das am Ende von Schritt e) erhalten wird, um ein Rohmaterial zu erhalten;
g) einen Schritt zum Wärmebehandeln des Rohmaterials, das am Ende von Schritt f) erhalten wird, bei einer Temperatur im Bereich zwischen 500 und 1.000 °C, mit oder ohne einen Luftstrom, der bis zu 60 Vol.-% Wasser enthält, um einen Aluminiumoxidträger zu erhalten;
h) einen Schritt zum Imprägnieren der aktiven Hydrier-/Dehydrierphase auf den Aluminiumoxidträger.

2. Verfahren nach Anspruch 1, wobei der Fortschrittsgrad des ersten Schritts zum Ausfällen a) im Bereich zwischen 6 und 12 % liegt.

3. Verfahren nach einem der Ansprüche 1 oder 2, wobei der Fortschrittsgrad des ersten Schritts zum Ausfällen a) im Bereich zwischen 7 und 11 % liegt.

4. Verfahren nach einem der Ansprüche 1 bis 3, wobei die basische Vorstufe Natriumaluminat ist.

**5.** Verfahren nach einem der Ansprüche 1 bis 4, wobei die saure Vorstufe Aluminiumsulfat ist.

**6.** Verfahren nach einem der Ansprüche 1 bis 5, wobei im ersten Schritt zum Ausfällen das wässrige Reaktionsmedium Wasser ist, und wobei der Schritt unter Rühren in Abwesenheit eines organischen Zusatzstoffs durchgeführt wird.

**Claims**

**1.** Process for preparing a hydroconversion catalyst comprising:

- a mainly aluminium oxide calcined support comprising a content of alumina greater than or equal to 90% and a content of silica as $SiO_2$ equivalent of at most 10% with respect to the final oxide;
- a hydro-dehydrogenating active phase comprising molybdenum, the content of metal molybdenum, measured by X-ray fluorescence, is between 6 and 14 wt. % of trioxide of molybdenum with respect to the total mass of the catalyst optionally at least one metal of group VIII of the Period Classification of the elements selected from nickel and/or cobalt, optionally phosphorus, the said catalyst having:

- a Sbet specific surface greater than 75 m²/g,
- a total pore volume measured by mercury porosimetry greater than or equal to 0.55 ml/g,
- a median mesopore volume diameter, measured by mercury intrusion porosimetry, greater than or equal to 16 nm,
- a mesopore volume as measured by mercury intrusion porosimetry greater than or equal to 0.50 ml/g,
- a macropore volume, measured by mercury intrusion porosimetry, less than 15 % of the total pore volume
- a median macropore diameter measured by mercury intrusion porosimetry between 60 and 200 nm ;
- said mesopore volume, said total pore volume and said macropore volume being measured by mercury intrusion porosimetry according to ASTM standard D4284-83;

the said process comprising at least the following steps:

a) a first precipitation step, in an aqueous reaction medium, of at least one basic precursor selected from sodium aluminate, potassium aluminate, ammonia, sodium hydroxide and potassium hydroxide, and at least one acidic precursor selected from aluminium sulphate, aluminium chloride, aluminium nitrate, sulphuric acid, hydrochloric acid and nitric acid, in which at least one of the basic or acidic precursors comprises aluminium, the relative flow rate of the acidic and basic precursors being selected so as to obtain a pH of the reaction media between 8.5 and 10.5 and the flow rate of the acidic and basic precursor or precursors containing aluminium is regulated so as to obtain a rate of progress of the first step of between 5 and 13%, the rate of progress being defined as the proportion of alumina formed as $Al_2O_3$ equivalent during the first precipitation step with respect to the total amount of alumina formed as $Al_2O_3$ equivalent at the end of the step c) of the preparation process, the said step operating at a temperature between 20 and 90°C and for a period of between 2 minutes and 30 minutes;
b) a heating step of the suspension at a temperature between 40 and 90°C for a period of between 7 minutes and 45 minutes,
c) a second precipitation step of the suspension obtained at the end of the heating step b) by adding to the suspension at least one basic precursor selected from sodium aluminate, potassium aluminate, ammonia, sodium hydroxide and potassium hydroxide, and at least one acidic precursor selected from aluminium sulphate, aluminium chloride, aluminium nitrate, sulphuric acid, hydrochloric acid and nitric acid, in which at least one of the basic or acidic precursors includes aluminium, the relative flow rate of the acidic and basic precursors being selected so as to obtain a pH of the reaction media between 8.5 and 10.5 and the flow rate of the acidic and basic precursor or precursors containing aluminium is regulated so as to obtain a rate of progress of the second step between 87 and 95%, the rate of progress being defined as the proportion of alumina formed as $Al_2O_3$ equivalent in the said second precipitation step with respect to the total amount of alumina formed as $Al_2O_3$ equivalent at the end of the step c) of the preparation process, the said step operating at a temperature between 40 and 90 °C and for a period between 2 minutes and 50 minutes;
d) a filtration step of the suspension obtained at the end of the second precipitation step c) so as to obtain an alumina gel;
e) a drying step of the said alumina gel obtained in stage d) in order to obtain a powder;
f) a moulding of the powder obtained at the end of the step e) so as to obtain a crude material;
g) a heat treatment step of the crude material obtained at the end of the step f) at a temperature between 500 and 1000°C, in the presence or otherwise of a stream of air containing up to 60% by volume of water, in order to obtain an aluminium oxide support;

h) an impregnation step of the hydro-dehydrogenating active phase on the said aluminium oxide support.

2. Process according to claim 1, in which the rate of progress of the first precipitation step a) is between 6 and 12%.

3. Process according to one of claims 1 and 2, in which the rate of progress of the first precipitation step a) is between 7 and 11%.

4. Process according to one of claims 1 to 3, in which the basic precursor is sodium aluminate.

5. Process according to one of claims 1 to 4, in which the acidic precursor is aluminium sulphate.

6. Process according to one of claims 1 to 5, in which in the first precipitation step the aqueous reaction medium is water and the said step is carried out while stirring, in the absence of organic additive.

FIG. 1

FIG. 2

## RÉFÉRENCES CITÉES DANS LA DESCRIPTION

**Documents brevets cités dans la description**

- US 5221656 A
- US 5089463 A
- US 7119045 B
- US 6589908 B
- US 4818743 A
- US 6332976 B
- WO 2010002699 A
- US 5968348 A
- US 6780817 B
- US 6919294 B
- US 4976848 A
- US 7169294 B
- US 4460707 A
- US 4267033 A
- GB 2069363 A
- US 7790652 B
- WO 2005028106 A
- US 7790562 B
- EP 1392431 A

**Littérature non-brevet citée dans la description**

- **M.S. RANA et al.** *Fuel,* 2007, vol. 86, 1216
- BRUNAUER-EMMETT-TELLER. *The Journal of American Society,* 1938, vol. 60, 309
- **JEAN CHARPIN ; BERNARD RASNEUR.** *Techniques de l'ingénieur, traité analyse et caractérisation,* 1050-5
- **F. ROUQUÉROL ; J. ROUQUÉROL ; K. SING.** Adsorption by powders and porous solids. Principles, methodology and applications. Academic Press, 1999
- **D.R. LIDE.** CRC Handbook of Chemistry and Physics. 2000
- BRUNAUER - EMMET - TELLER. *The journal of the American Chemical Society,* 1938, vol. 60, 309
- **J. I. LANGFORD ; A. J. C. WILSON.** Scherrer after sixty years: A survey and some new results in the détermination of crystallite size. *Appl. Cryst.,* 1978, vol. 11, 102-113
- **KIKUO OKUYAMA.** Advanced Powder Technology. *Asep Bayu Dani Nandiyanto,* 2011, vol. 22, 1-19